# EUROPEAN PATENT APPLICATION

(11) **EP 4 822 953 A1**
(43) Date of publication of application: **14.10.2026**
(21) Application number: 26171303.6
(22) Date of filing: 08.04.2026
(51) Int. Cl.: H02K 3/28

(54) **ROTARY ELECTRIC MACHINE INCLUDING THREE-PHASE COIL**

(30) Priority: 09.04.2025 JP 2025064638
(71) Applicant: Toyota Jidosha Kabushiki Kaisha, Toyota-shi, Aichi-ken 471-8571 (JP)
(72) Inventor: OHIRA, Kengo, TOYOTA-SHI, AICHI-KEN, 471-8571 (JP)
(74) Representative: Cabinet Beau de Loménie

(57) **Abstract**

A rotary electric machine (10;110;210;310;410;510;610) includes a stator core (22) having a plurality of slots (22s), and a three-phase coil (24;124;224;324;424;524;624) including coil segments (80) received in first through sixth layers in the slots (22s). Some of the coil segments received in the third and fourth layers in the same slot (22s) are different from each other in phase. A phase coil (40,50,60;140,150,160; 240,250,260;340,350,360; 440,450,460;540,550,560;640,650,660) of each phase in the three-phase coil (24;124;224;324;424;524;624) includes an inward winding portion (42a,44a,52a,54a,62a,64a; 142a, 144a, 152a, 154a, 162a, 164a;242a,244a,252a,254a,262a,2 64a;342a,344a,352a,354a,362a,364a;442a,444a,452a,454a,462a,464a;542a,544a,552a,5 54a,562a,564a;640a,640c,650a,650c,660a,660c) and an outward winding portion (42b,44b,52b,54b,62b,64b; 142b, 144b, 152b, 154b, 162b, 164b;242b,244b,252b,254b, 262b,264b;342b,344b,352b,354b,362b,364b;442b,444b,452b,454b,462b,464b;542b,544 b,552b,554b,562b,564b;640b,640d,650b,650d,660b,660d). Each of the inward winding portion and the outward winding portion includes an outer-layer connection portion (Ro). Regarding a connection order of the coil segments (80) as seen from side of an input terminal (72, 74, 76) of the phase coil, connection of the coil segments (80) received in the third layer and connection of the coil segments (80) received in the fourth layer are made after the outer-layer connection portion (Ro) in the inward winding portion.

## Description

### FIELD OF THE INVENTION

The present invention relates to a rotary electric machine including a stator core having a plurality of slots and a three-phase coil of distributed winding in which six coil segments are received in each of the slots.

### BACKGROUND OF THE INVENTION

There is known a rotary electric machine including a stator core having a plurality of slots and a three-phase coil of distributed winding in which six coil segments are received in each of the slots. For example, such a rotary electric machine is disclosed in JP 2023-74145 A. In the rotary electric machine disclosed in this Japanese Patent Application Publication, the stator is produced by preparing reticulated coils without a welded portion, expanding the coils on an inner peripheral side of the stator core, and inserting them into the slots. This manufacturing process requires large-scale manufacturing equipment. Further, because the coils are expanded on the inner peripheral side of the stator core before being inserted into the slots, openings on the inner peripheral side of the slots must be widened in a circumferential direction of the stator core. This tends to reduce a fill factor of the coils in the slots. Here, the "fill factor" is a ratio [%] of a total cross-sectional area of metal parts of the coils to an effective cross-sectional area of the slots. Further, when the rotary electric machine is operated, the coils in the slots are vibrated whereby NV (Noise Vibration) performance could be reduced.

### SUMMARY OF THE INVENTION

In view of the rotary electric machine disclosed in the above-identified Japanese Patent Application Publication, in order to improve the fill factor and suppress reduction of the NV performance, it might be possible to employ a method of winding a three-phase coil in a distributed manner by using coil segments each of which includes a pair of arm portions and a bridge portion connecting between base portion of the pair of arm portions. For example, in the method using the coil segments, the coil segments are inserted into the plurality of slots, and then distal end portions of the pairs of arm portions of the coil segments inserted in the different slots are welded whereby the three-phase coil is wounded. In this method using the coil segments, a thinner insulating film on each of the coil segments is effective in further improving the fill factor, but the thickness of the insulating film must be set according to a potential difference between the coil segments received in the same slots. That is, the smaller the potential difference between the coil segments placed in the same slots, the thinner the insulating film of the coil segments can be, thereby improving the fill factor.

The present invention was made in view of the background art described above. It is therefore an object of the present invention to provide a rotary electric machine in which a potential difference between coil segments received in each slot is reduced and a fill factor of a coil in each slot is improved.

The object indicated above is achieved according to the following aspects of the present invention.

According to a first aspect of the invention, there is provided a rotary electric machine including: a cylindrical-shaped stator core extending in a direction of an axis and having a plurality of slots that are arranged at a predetermined pitch in a circumferential direction of the stator core; a three-phase coil including a plurality of coil segments received in the slots, each of the coil segments including a pair of arm portions and a bridge portion connecting between base portions of the arm portions, the three-phase coil being wound in a distributed winding in which each pair of the coil segments are received in different ones of the slots such that a distal end portion of one of the pair of arm portions of one of the each pair of the coil segments and a distal end portion of one of the pair of arm portions of the other of the each pair of the coil segments are welded to each other; and a rotor disposed on an inner peripheral side of the stator core. A number of the slots is six times a number of poles of the rotor. Each of the slots receives therein six of the coil segments such that the received six coil segments are located in respective received positions located in first, second, third, fourth, fifth and sixth layers as seen from an outer peripheral side of the stator core toward the inner peripheral side. The coil segments of the same phase are received in the first, second and third layers in a first pair of the slots which are adjacent to each other in the circumferential direction, and are received in the fourth, fifth and sixth layers in a second pair of the slots which are adjacent to each other in the circumferential direction and which are shifted in the circumferential direction from the first pair of the slots by the predetermined pitch, such that the coil segments received in the third and fourth layers in a same one of the slots, which is common to both of the first and second pairs of the slots, are of different phases. A phase coil of each phase in the three-phase coil includes an inward winding portion in which the coil segments are connected from the outer peripheral side toward the inner peripheral side, an outward winding portion in which the coil segments are connected from the inner peripheral side toward the outer peripheral side, and a connection portion connecting between an inner-peripheral-side end portion of the inward winding portion and an inner-peripheral-side end portion of the outward winding portion. Each of the inward winding portion and the outward winding portion includes an outer-layer connection portion in which the coil segments extending in the circumferential direction are connected in the first and second layers. Regarding a connection order of the coil segments as seen from side of an input terminal of the phase coil, connection of the coil segments received in the third layer and connection of the coil segments received in the fourth layer are made after the outer-layer connection portion in the inward winding portion.

According to a second aspect of the invention, in the rotary electric machine according to the first aspect of the invention, each of the inward winding portion and the outward winding portion includes an inner layer inner-layer connection portion in which the coil segments extending in the circumferential direction are connected in the fifth and sixth layers, an intermediate-layer connection portion in which the coil segments extending in the circumferential direction are connected in the third and fourth layers, an outer-layer-side transfer portion which connects between an end portion of the outer-layer connection portion and an end portion of the intermediate-layer connection portion, and an inner-layer-side transfer portion which connects between an end portion of the inner-layer connection portion and the end portion of the intermediate-layer connection portion.

According to a third aspect of the invention, in the rotary electric machine according to the second aspect of the invention, the outer-layer connection portion, the intermediate-layer connection portion and the inner-layer connection portion in the inward winding portion extend in the same direction as the circumferential direction.

According to a fourth aspect of the invention, in the rotary electric machine according to the second or third aspect of the invention, the outer-layer connection portion, the intermediate-layer connection portion and the inner-layer connection portion in the inward winding portion extend in one of opposite directions as the circumferential direction, wherein the outer-layer connection portion, the intermediate-layer connection portion and the inner-layer connection portion in the outward winding portion extend in the other of the opposite directions as the circumferential direction.

According to a fifth aspect of the invention, in the rotary electric machine according to any one of the second through fourth aspects of the invention, in the outer-layer connection portion and the inner-layer connection portion, a number of pitches on side of the bridge portion of each of the coil segments and the number of pitches on side of the distal end portion of each of the coil segments are both 6, wherein, in the intermediate-layer connection portion, one and the other of the number of pitches on side of the bridge portion of each of the coil segments and the number of pitches on side of the distal end portion of each of the coil segments are 5 and 7, wherein, in the outer-layer-side transfer portion and the inner-layer-side transfer portion, one of the number of pitches on side of the bridge portion of each of the coil segments and the number of pitches on side of the distal end portion of each of the coil segments is 6, and wherein the number of pitches represents how many times as large as the predetermined pitch at which the slots are arranged in the circumferential direction.

According to a sixth aspect of the invention, in the rotary electric machine according to any one of the first through fifth aspects of the invention, a winding start position of the outer-layer connection portion in the inward winding portion of the phase coil is set in a predetermined position that is predetermined such that a maximum value of a voltage difference between the coil segments of the different phases that are received in the third and fourth layers in the same one of the slots is reduced.

According to a seventh aspect of the invention, in the rotary electric machine according to any one of the first through sixth aspects of the invention, the three-phase coil is Y-connected, wherein the phase coil includes a first coil portion and a second coil portion connected in parallel between the input terminal and a neutral point, and wherein a connection structure of the coil segments in the phase coil is the same for each phase in the three-phase coil.

According to an eighth aspect of the invention, in the rotary electric machine according to the seventh aspect of the invention, in the first coil portion and the second coil portion of the phase coil in the three-phase coil, the coil segments, which are the same in terms of the connection order from side of the input terminal, are received in a pair of the slots that are adjacent to each other in the circumferential direction.

According to a ninth aspect of the invention, in the rotary electric machine according to any one of the first through sixth aspects of the invention, the three-phase coil is Y-connected, wherein the phase coil includes a single coil portion between the input terminal and a neutral point, wherein the phase coil includes two inward winding portions, two outward winding portions and two connection portions, and wherein a connection structure of the coil segments in the phase coil is the same for each phase in the three-phase coil.

According to a tenth aspect of the invention, in the rotary electric machine according to any one of the first through ninth aspects of the invention, in the two inward winding portions, the coil segments, which are the same in terms of the connection order from side of the input terminal, are received in a pair of the slots that are adjacent to each other in the circumferential direction, and wherein, in the two outward winding portions, the coil segments, which are the same in terms of the connection order from side of the input terminal, are received in a pair of the slots that are adjacent to each other in the circumferential direction.

In the rotary electric machine according to the first aspect of the invention, (a) the number of the slots is six times the number of poles of the rotor, (b) each of the slots receives therein six of the coil segments such that the received six coil segments are located in respective received positions located in the first, second, third, fourth, fifth and sixth layers as seen from the outer peripheral side of the stator core toward the inner peripheral side, wherein the coil segments of the same phase are received in the first, second and third layers in the first pair of the slots which are adjacent to each other in the circumferential direction, and are received in the fourth, fifth and sixth layers in the second pair of the slots which are adjacent to each other in the circumferential direction and which are shifted in the circumferential direction from the first pair of the slots by the predetermined pitch, such that the coil segments received in the third and fourth layers in a same one of the slots, which is common to both of the first and second pairs of the slots, are of different phases, (c) the phase coil of each phase in the three-phase coil includes the inward winding portion in which the coil segments are connected from the outer peripheral side toward the inner peripheral side, the outward winding portion in which the coil segments are connected from the inner peripheral side toward the outer peripheral side, and the connection portion connecting between the inner-peripheral-side end portion of the inward winding portion and the inner-peripheral-side end portion of the outward winding portion, (d) each of the inward winding portion and the outward winding portion includes the outer-layer connection portion in which the coil segments extending in the circumferential direction are connected in the first and second layers, and (e) regarding a connection order of the coil segments as seen from side of an input terminal of the phase coil, the connection of the coil segments received in the third layer and the connection of the coil segments received in the fourth layer are made after the outer-layer connection portion in the inward winding portion. In the three-phase coil, where the coil segments of the phase coil of the same phase are adjacent in the same slots, the larger a difference in the connection order as seen from side of the input terminal common to those adjacent coil segments, the larger an electric voltage applied between those adjacent coil segments. In the three-phase coil, where the coil segments of the phase coil of different phases are adjacent in the same slots, the smaller a sum of the connection orders as seen from side of the input terminal of each phase of those adjacent coil segments, the greater the electric voltage applied between those adjacent coil segments. In the present invention, a maximum value of a voltage difference between adjacent coil segments in the same slots is an issue in a case in which the coil segments of the phase coils of different phases are adjacent in the same slots in the three-phase coil. Owing to a construction of the above-described feature (b), the coil segments received in the third and fourth layers in the same one of the slots, which is common to both of the first and second pairs of the slots, are of different phases. Owing to constructions of the above-described features (c)-(e), in the connection of the coil segments as seen from side of the input terminal of the phase coil, the connection of the coil segment received in the third layer is made after the outer-layer connection portion in the inward winding portion is caused to extend in the circumferential direction, and the connection of the coil segment received in the fourth layer is made after the outer-layer connection portion in the inward winding portion. Thus, an impedance between the adjacent coil segments received in the third and fourth layers is reduced in proportion to a number of the coil segments connected in the outer-layer connection portion of the inward winding portion as seen from side of the input terminal of each phase. Therefore, the constructions of the above-described features (c)-(e) result in a smaller maximum impedance between the adjacent coil segments with different phases in the same slot, as compared with a case without the constructions of the above-described features (c)-(e). The smaller maximum impedance results in a smaller maximum value of the voltage difference between the adjacent coil segments with the different phases in the same slot. Therefore, an insulating film on each of the coil segments can be made thinner whereby a fill factor can be improved. Thus, for example, it is possible to reduce a size of the rotary electric machine while maintaining the same performance, or to improve a performance of the rotary electric machine while maintaining the same size. The above-described feature (e) can be expressed also as a feature (e') that, regarding a connection order of the coil segments as seen from side of an input terminal of the phase coil, the connection order of the coil segments received in the third layer and the connection order of the coil segments received in the fourth layer are later than the connection order of the coil segments in the outer-layer connection portion in the inward winding portion. Further, the above-described feature (e) can be expressed also as a feature (e") that the coil segments received in the third and fourth layers are electrically connected to the input terminal via the coil segments received in the outer-layer connection portion in the inward winding portion.

In the rotary electric machine according to the second aspect of the invention, each of the inward winding portion and the outward winding portion includes the inner-layer connection portion in which the coil segments extending in the circumferential direction are connected in the fifth and sixth layers, the intermediate-layer connection portion in which the coil segments extending in the circumferential direction are connected in the third and fourth layers, the outer-layer-side transfer portion which connects between the end portion of the outer-layer connection portion and the end portion of the intermediate-layer connection portion, and the inner-layer-side transfer portion which connects between the end portion of the inner-layer connection portion and the end portion of the intermediate-layer connection portion. Thus, each of the inward winding portion and the outward winding portion includes the outer-layer connection portion, the intermediate-layer connection portion, the inner-layer connection portion, the outer-layer-side transfer portion and the inner-layer-side transfer portion. This allows a number of pitches in the circumferential direction in the outer-layer connection portion, intermediate-layer connection portion and inner-layer connection portion to be increased or reduced as needed, making it easy to construct the three-phase coil of distributed winding with the number of the slots that is six times the number of the poles of the rotor.

In the rotary electric machine according to the third aspect of the invention, the outer-layer connection portion, the intermediate-layer connection portion and the inner-layer connection portion in the inward winding portion extend in the same direction as the circumferential direction. Where the outer-layer connection portion, the intermediate-layer connection portion and the inner-layer connection portion in the inward winding portion all have the same circumferential bending direction, circumferential bending directions of the coil segments can be unified in the outer-layer connection portion, the intermediate-layer connection portion and the inner-layer connection portion, as compared with a case in which all of them do not have the same circumferential bending direction. This allows processes of bending and welding the coil segments to be repeated in a repeated pattern, thereby improving a workability in a process of winding the three-phase coil.

In the rotary electric machine according to the fourth aspect of the invention, the outer-layer connection portion, the intermediate-layer connection portion and the inner-layer connection portion in the inward winding portion extend in one of opposite directions as the circumferential direction, and the outer-layer connection portion, the intermediate-layer connection portion and the inner-layer connection portion in the outward winding portion extend in the other of the opposite directions as the circumferential direction. This allows the inward winding portion and the outward winding portion to have a simple double-helix configuration, and allows the processes of bending and welding the coil segments to be repeated in a repeated pattern, thereby improving the workability in the process of winding the three-phase coil, for example.

In the rotary electric machine according to the fifth aspect of the invention, (a) in the outer-layer connection portion and the inner-layer connection portion, the number of pitches (that represents how many times as large as the above-described predetermined pitch at which the slots are arranged in the circumferential direction) on side of the bridge portion of each of the coil segments and the number of pitches on side of the distal end portion of each of the coil segments are both 6, (b) in the intermediate-layer connection portion, one and the other of the number of pitches on side of the bridge portion of each of the coil segments and the number of pitches on side of the distal end portion of each of the coil segments are 5 and 7, and (c) in the outer-layer-side transfer portion and the inner-layer-side transfer portion, one of the number of pitches on side of the bridge portion of each of the coil segments and the number of pitches on side of the distal end portion of each of the coil segments is 6. With use of the coil segments having constructions of the above-described features (a)-(c), the coil segments of the same phase are received in the first, second and third layers in the first pair of the slots which are adjacent to each other in the circumferential direction, and are received in the fourth, fifth and sixth layers in the second pair of the slots which are adjacent to each other in the circumferential direction and which are shifted in the circumferential direction from the first pair of the slots by the predetermined pitch. In addition, the types of coil segments having the number of pitches on side of the bridge portion and the number of pitches on side of the distal end portion being different from each other are limited.

In the rotary electric machine according to the sixth aspect of the invention, the winding start position of the outer-layer connection portion in the inward winding portion of the phase coil is set in the predetermined position that is predetermined such that the maximum value of the voltage difference between the coil segments of the different phases that are received in the third and fourth layers in the same one of the slots is reduced. With the winding start position of the outer-layer connection portion in the inward winding portion of the phase coil being set in the predetermined position, the maximum value of the voltage difference between the coil segments of the different phases that are received in the third and fourth layers in the same one of the slots is further reduced. Therefore, the insulating film on each of the coil segments can be made thinner more whereby the fill factor can be improved. Thus, for example, it is possible to reduce the size of the rotary electric machine while maintaining the same performance, or to improve the performance of the rotary electric machine while maintaining the same size.

In the rotary electric machine according to the seventh aspect of the invention, (a) the three-phase coil is Y-connected, (b) the phase coil includes the first coil portion and the second coil portion connected in parallel between the input terminal and the neutral point, and (c) the connection structure of the coil segments in the phase coil is the same for each phase. In this way, where the connection structure of the coil segments in each phase coil is the same, the connection structure is simpler and less complicated than where the connection structure of the coil segments in each phase coil is not the same. This allows the processes of bending and welding the coil segments to be repeated in a repeated pattern, thereby improving the workability in the process of winding the three-phase coil, for example.

In the rotary electric machine according to the eighth aspect of the invention, in the first coil portion and the second coil portion of the phase coil in the three-phase coil, the coil segments, which are the same in terms of the connection order as seen from side of the input terminal, are received in the pair of the slots that are adjacent to each other in the circumferential direction. Thus, in the first coil portion and the second coil portion, the coil segments with the same connection order as seen from side of the input terminal are received in the adjacent slots in the circumferential direction, so that the connection structure of the first coil portion and the second coil portion is the same. In this way, where the first coil portion and the second coil portion have the same connection structure, the connection structure is simplified and not complicated as compared to where they do not have the same connection structure. This allows the processes of bending and welding the coil segments to be repeated in a repeated pattern, thereby further improving the workability in the process of winding the three-phase coil, for example.

In the rotary electric machine according to the ninth aspect of the invention, (a) the three-phase coil is Y-connected, (b) the phase coil includes the single coil portion between the input terminal and the neutral point, (c) the phase coil includes the two inward winding portions, the two outward winding portions and the two connection portions, and (d) the connection structure of the coil segments in the phase coil is the same for each phase in the three-phase coil. Owing to constructions of the above-described feature (c), where the three-phase coil is Y-connected, it is possible to easily make the coil segments to be common to a case in which a single phase coil is connected in series between the input terminal of each phase coil and the neutral point and a case in which two phase coils are connected in parallel between the input terminal of each phase coil and the neutral point.

In the rotary electric machine according to the tenth aspect of the invention, the phase coil in the three-phase coil is constructed such that (a) in the two inward winding portions, the coil segments, which are the same in terms of the connection order as seen from side of the input terminal, are received in a pair of the slots that are adjacent to each other in the circumferential direction, and (b) in the two outward winding portions, the coil segments, which are the same in terms of the connection order as seen from side of the input terminal, are received in a pair of the slots that are adjacent to each other in the circumferential direction. In this way, by inserting the coil segments with the same connection order as seen from side of the input terminal into the slots adjacent in the circumferential direction in the two inward winding portions, the connection structures in the two inward winding portions can be identical. By inserting the coil segments with the same connection order as seen from side of the input terminal into the slots adjacent in the circumferential direction in the two outward winding portions, the connection structures in the two outward winding portions can be identical. In this way, where the connection structure of the coil segments is the same between the two inward winding portions and the connection structure of the coil segments is the same between the two outward winding portions, the connection structure is simpler and less complicated than where the connection structure of the coil segments is not the same between the two inward winding portions and the connection structure of the coil segments is not the same between the two outward winding portions. This allows the processes of bending and welding the coil segments to be repeated in a repeated pattern, thereby improving the workability in the process of winding the three-phase coil, for example.

### BRIEF DESCRIPTION OF THE DRAWINGS

FIG. 1 is a view explaining an outline of a cross section of a rotary electric machine according to the present invention, wherein the cross section is taken in a plane containing an axis of the rotary electric machine;

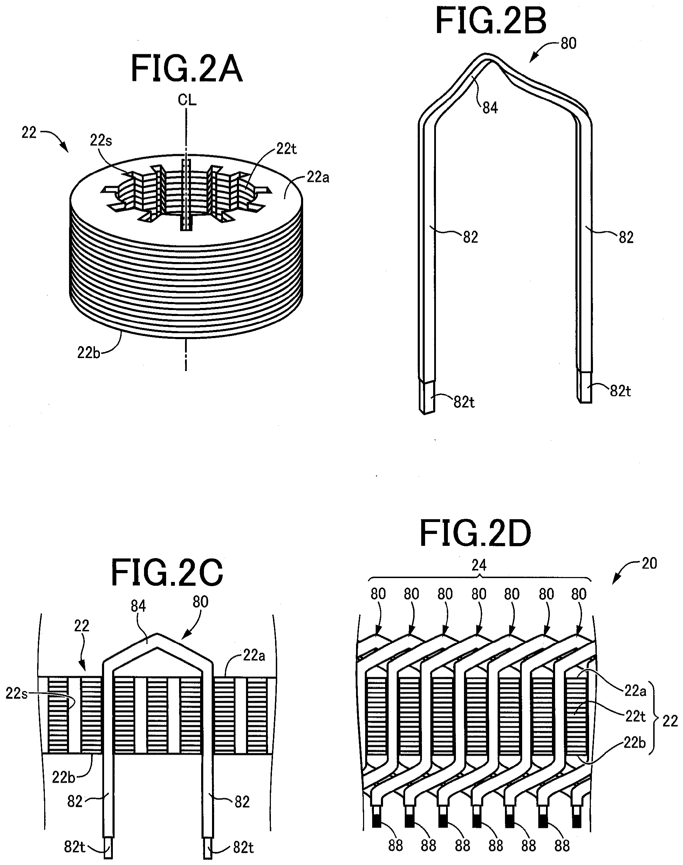

FIGS. 2A-2D are views explaining an outline of a process of winding a three-phase coil around a stator core of a rotary electric machine according to a first embodiment of the present invention, wherein FIG. 2A is a perspective view of the stator core, FIG. 2B is a perspective view of a coil segment, FIG. 2C is a view of the stator core, expanded in the circumferential direction of the stator core, as seen from an inner peripheral side of the stator core toward an outer peripheral side of the stator core, showing a state in which the coil segment has been inserted into slots provided in the stator core, and FIG. 2D is a view of the stator core, expanded in the circumferential direction, as seen from the inner peripheral side toward the outer peripheral side, showing a state in which a pair of arm portions of each of the coil segments are received in the slots provided in the stator core, and a distal end portion of one of the pair of arm portions of one of the coil segments and a distal end portion of one of the pair of arm portions of another of the coil segments are welded to each other;
FIG. 3 is an electrical equivalent circuit diagram of the three-phase coil wound around the stator core of the rotary electric machine according to the first embodiment of the present invention;
FIG. 4A-4C are views explaining a connection structure of the coil segments constituting the three-phase coil shown in FIG. 3, wherein FIG. 4A is a layout diagram of the coil segments, FIG. 4B is an explanatory diagram explaining allocation of received positions of the coil segments of a first coil portion and a second coil portion in a U phase coil, and FIG. 4C is a view explaining an outline of the connection structure of the U phase coil;
FIGS. 5A and 5B are views explaining the connection structure of the coil segments constituting the three-phase coil shown in FIGS. 4A-4C, wherein FIG. 5A is a view explaining an overall structure of the connection structure of the three-phase coil, and FIG. 5B is a view explaining details of the connection structure of the U phase coil;
FIG. 6 is a view explaining types of coil segments used to constitute the three-phase coil shown in FIGS. 4A-4C;

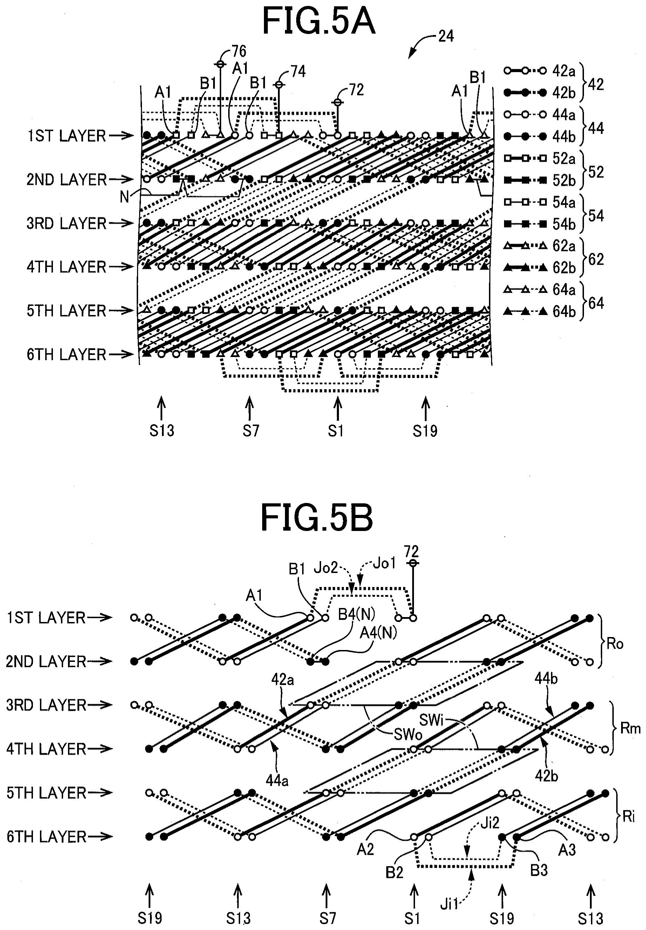

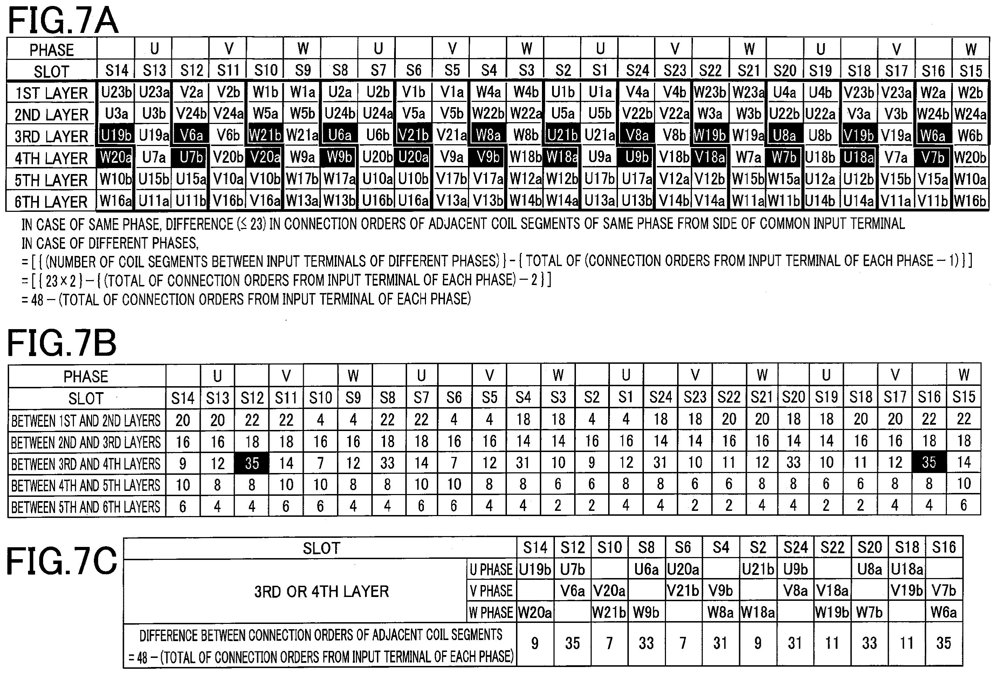

FIGS. 7A-7C are views explaining a maximum value of a voltage difference between adjacent coil segments in the same slot in the three-phase coil shown in FIG. 5A and 5B, wherein FIG. 7A is a view explaining a relationship between the voltage difference between the adjacent coil segments and a connection order of the coil segments as seen from side of an input terminal, FIG. 7B is a view showing the voltage difference between the adjacent coil segments, and FIG. 7C is a view showing the connection order of the coil segments as seen from side of the input terminal and the voltage difference between the adjacent coil segments where the coil segments of different phases are adjacent in the same slots;
FIG. 8 is a view explaining a positional relationship among the coil segments in the three-phase coil where the coil segments of different phases are adjacent in the same slots in the three-phase coil shown in FIGS. 5A and 5B;
FIGS. 9A-9C are views explaining a connection structure of coil segments constituting a three-phase coil of comparative example 1, wherein FIG. 9A is a layout diagram of the coil segments, FIG. 9B is a view explaining an outline of the connection structure of a U phase coil, and FIG. 9C is a view explaining types of coil segments used to constitute the three-phase coil;
FIG. 10 is a view explaining a maximum value of a voltage difference between adjacent coil segments in the same slot in the three-phase coil shown in FIGS. 9A-9C, and showing the voltage difference between the adjacent coil segments;
FIG. 11 is a layout diagram of coil segments constituting a three-phase coil wound around a stator core of a rotary electric machine according to a second embodiment of the present invention;
FIGS. 12A-12C are views explaining the connection structure of the coil segments constituting the three-phase coil shown in FIG. 11, wherein FIG. 12A is a view explaining an overall structure of the connection structure of the three-phase coil, FIG. 12B is a view explaining details of the connection structure of the U phase coil, and FIG. 12C is a view explaining types of coil segments used to constitute the three-phase coil;
FIG. 13 is a view explaining a maximum value of a voltage difference between adjacent coil segments in the same slot in the three-phase coil shown in FIG. 12, and showing the voltage difference between the adjacent coil segments;
FIG. 14 is a layout diagram of coil segments constituting a three-phase coil wound around a stator core of a rotary electric machine according to a third embodiment of the present invention;
FIGS. 15A-15C are views explaining the connection structure of the coil segments constituting the three-phase coil shown in FIG. 14, wherein FIG. 15A is a view explaining an overall structure of the connection structure of the three-phase coil, FIG. 15B is a view explaining details of the connection structure of the U phase coil, and FIG. 15C is a view explaining types of coil segments used to constitute the three-phase coil;
FIG. 16 is a view explaining a maximum value of a voltage difference between adjacent coil segments in the same slot in the three-phase coil shown in FIG. 15, and showing the voltage difference between the adjacent coil segments;
FIG. 17 is a layout diagram of coil segments constituting a three-phase coil wound around a stator core of a rotary electric machine according to a fourth embodiment of the present invention;
FIGS. 18A-18C are views explaining the connection structure of the coil segments constituting the three-phase coil shown in FIG. 17, wherein FIG. 18A is a view explaining an overall structure of the connection structure of the three-phase coil, FIG. 18B is a view explaining details of the connection structure of the U phase coil, and FIG. 18C is a view explaining types of coil segments used to constitute the three-phase coil;
FIG. 19 is a view explaining a maximum value of a voltage difference between adjacent coil segments in the same slot in the three-phase coil shown in FIG. 18, and showing the voltage difference between the adjacent coil segments;
FIG. 20 is a layout diagram of coil segments constituting a three-phase coil wound around a stator core of a rotary electric machine according to a fifth embodiment of the present invention;
FIGS. 21A and-21B are views explaining the connection structure of the coil segments constituting the three-phase coil shown in FIG. 20, wherein FIG. 21A is a view explaining an overall structure of the connection structure of the three-phase coil, and FIG. 21B is a view explaining types of coil segments used to constitute the three-phase coil;
FIG. 22 is a view explaining a maximum value of a voltage difference between adjacent coil segments in the same slot in the three-phase coil shown in FIG. 21, and showing the voltage difference between the adjacent coil segments;
FIGS. 23A and-23B are views explaining the connection structure of coil segments constituting a three-phase coil wound around a stator core of a rotary electric machine according to a sixth embodiment of the present invention, wherein FIG. 23A is a view explaining an overall structure of the connection structure of the three-phase coil, and FIG. 23B is a view explaining types of coil segments used to constitute the three-phase coil;
FIG. 24 is an electrical equivalent circuit diagram of a three-phase coil wound around a stator core of a rotary electric machine according to a seventh embodiment of the present invention;
FIG. 25A and 25B are views explaining a connection structure of the coil segments constituting the three-phase coil shown in FIG. 24, wherein FIG. 25A is a layout diagram of the coil segments, and FIG. 25B is a view explaining an outline of the connection structure of the U phase coil;
FIGS. 26A-26C are views explaining the connection structure of the coil segments constituting the three-phase coil shown in FIG. 25A and 25B, wherein FIG. 26A is a view explaining an overall structure of the connection structure of the three-phase coil, FIG. 26B is a view explaining details of the connection structure of the U phase coil, and FIG. 26C is a view explaining types of coil segments used to constitute the three-phase coil;

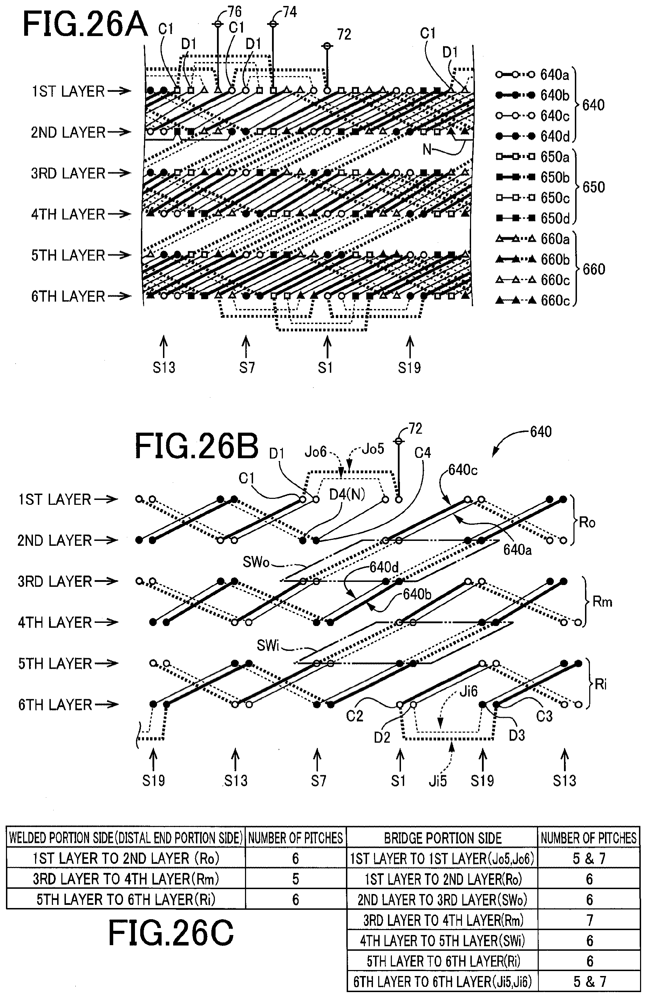

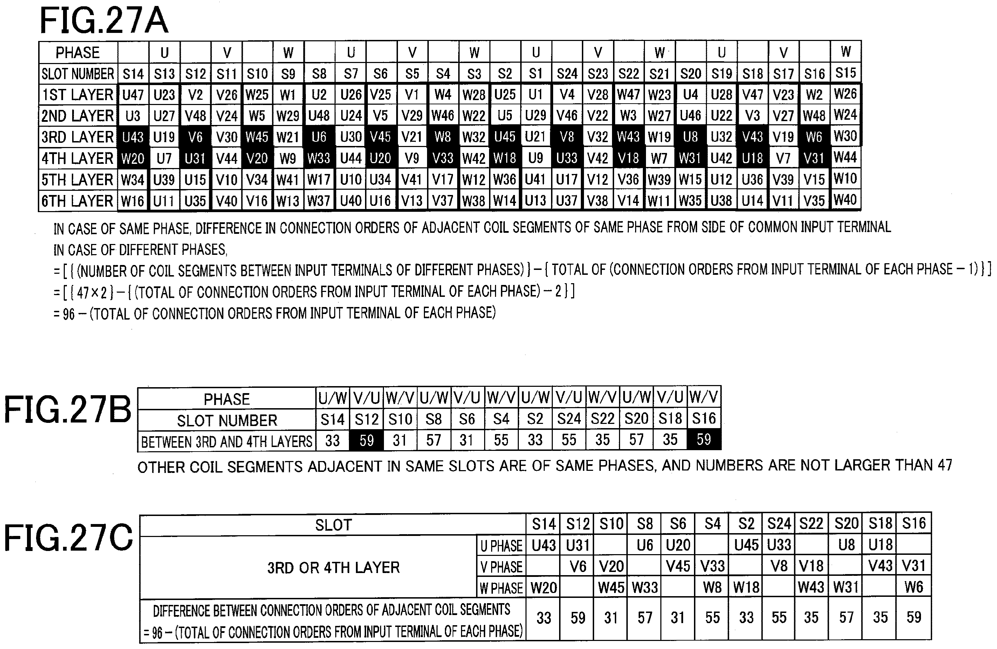

FIGS. 27A-27C are views explaining a maximum value of a voltage difference between adjacent coil segments in the same slot in the three-phase coil shown in FIGS. 26A-26C, wherein FIG. 27A is a view explaining a relationship between the voltage difference between the adjacent coil segments and a connection order of the coil segments as seen from side of an input terminal, FIG. 27B is a view showing the voltage difference between the adjacent coil segments, and FIG. 27C is a view showing the connection order of the coil segments as seen from side of the input terminal and the voltage difference between the adjacent coil segments where the coil segments of different phases are adjacent in the same slots;
FIG. 28 is a view explaining a positional relationship within the three-phase coil where the coil segments of different phases are adjacent in the same slots in the three-phase coil shown in 26A-26C;
FIGS. 29A-29C are views explaining a connection structure of coil segments constituting a three-phase coil of comparative example 2, wherein FIG. 29A is a layout diagram of the coil segments, FIG. 29B is a view explaining an outline of the connection structure of a U phase coil, and FIG. 29C is a view explaining types of coil segments used to constitute the three-phase coil; and
FIG. 30 is a view explaining a maximum value of a voltage difference between adjacent coil segments in the same slot in the three-phase coil shown in FIGS. 29A-29C, and showing the voltage difference between the adjacent coil segments.

### DETAILED DESCRIPTION OF PREFERRED EMBODIMENTS

There will be described embodiments of the present invention in details with reference to drawings. It is noted that figures of the drawings are simplified or deformed as needed, and each portion is not necessarily precisely depicted in terms of dimension ratio, shape, etc., for easier understanding of each of the embodiments. In the present specification, "direction parallel to the axis CL", "radial direction centered on the axis CL" and "circumferential direction centered on the axis CL" will be simply referred to as "axis CL direction", "radial direction" and "circumferential direction", respectively.

### FIRST EMBODIMENT

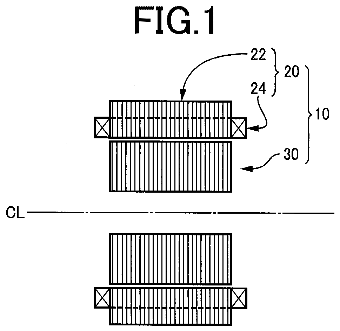

FIG. 1 is a view explaining an outline of a cross section of a rotary electric machine 10 according to the present invention, wherein the cross section is taken in a plane containing an axis CL of the rotary electric machine 10.

The rotary electric machine 10 is an electric motor that functions as a power source for driving, for example, a hybrid electric vehicle or an electric vehicle. The rotary electric machine 10 includes a cylindrical stator core 22 made of laminated electromagnetic steel sheets extending in the axis CL direction, and a rotor 30 provided on an inner peripheral side of the stator core 22. The stator core 22 has a plurality of grooves, i.e., slots 22s (see FIG. 2) which are provided in an inner circumferential surface of the stator core 22 and which extend radially from the axis CL toward an outer peripheral side of the stator core 22. Each of the slots 22 penetrates the stator core 22 in the axis CL direction. Teeth 22t (see FIG. 2) are formed between adjacent slots 22s. A three-phase coil 24 with distributed winding is wound around the slots 22s. The stator core 22 and the three-phase coil 24 cooperate to constitute a stator 20. The rotor 30 is, for example, a well-known embedded magnet type, and the number of poles of the rotor 30 is defined. The number of poles of the rotor 30 is a multiple of two, and is four in the present embodiment.

FIGS. 2A-2D are views explaining an outline of a process of winding the three-phase coil 24 around the stator core 22 of the rotary electric machine 10 according to a first embodiment of the present invention, wherein FIG. 2A is a perspective view of the stator core 22, FIG. 2B is a perspective view of a coil segment 80, FIG. 2C is a view of the stator core 22, expanded in the circumferential direction of the stator core 22, as seen from an inner peripheral side of the stator core 22 toward an outer peripheral side of the stator core 22, showing a state in which the coil segment 80 is inserted in the slots 22s provided in the stator core 22, and FIG. 2D is a view of the stator core 22, expanded in the circumferential direction, as seen from the inner peripheral side toward the outer peripheral side, showing a state in which a pair of arm portions 82 of each of the coil segments 80 are received in the slots 22s provided in the stator core 22, and a distal end portion of one of the pair of arm portions 82 of one of the coil segments 80 and a distal end portion of one of the pair of arm portions 82 of another of the coil segments 80 are welded to each other.

In the present embodiment, the number of slots 22s is 24 (= 4 × 6), which is six times the number of poles of the rotor 30. FIG. 2A shows the number of slots 22s reduced to 12.

As shown in FIG. 2B, each coil segment 80 is composed of a so-called rectangular conductor with a rectangular cross section, such as elongated conductor plates, with an insulating film such as enamel formed on its surface. The coil segment 80 is bent into a substantially U-shape. The coil segment 80 has a pair of arm portions 82 extending linearly in the same direction on both sides of the U, and a bridge portion 84 connecting between base portions of the arm portions 82. The insulating film is removed from the distal end portions 82t of the respective arm portions 82.

First, as shown in FIG. 2C, the pair of arm portions 82 are inserted into the slots 22s from an end portion 22a of the stator core 22 toward another end portion 22b of the stator core 22. The end portion 22a is one of opposite end portions of the stator core 22 in the axis CL direction, while the other end portion 22b is the other of the opposite end portions of the stator core 22 in the axis CL direction. Thus, the bridge portion 84 is positioned on side of the end portion 22a, and the distal end portions 82t of the pair of arm portions 82 protrude from the other end portion 22b.

Next, as shown in FIG. 2D, each distal end portion 82t of the pair of arm portions 82 of the coil segments 80 is bent circumferentially. Then, one of the distal end portions 82t of the pair of arm portions 82 of one coil segment 80 is welded to one of the distal end portions 82t of the pair of arm portions 82 of another coil segment 80. That is, for the coil segments 80 inserted into of the slots 22s, the distal end portions 82t of one of the pairs of arm portions 82 of the coil segments 80 inserted into different slots 22s are welded to each other. In this way, the distal end portions 82t of the coil segments 80 are electrically connected by welding, thereby forming the three-phase coil 24 wound around the teeth 22t. In the three-phase coil 24, portions in which the distal end portions 82t of the coil segments 80 are welded together are welded portions 88. The welding is, for example, TIG (Tungsten Inert Gas) welding. It is noted that FIGS. 2A-2D are conceptual illustrations, and that the coil segments 80 are actually inserted into the slots 22s in a circular shape and welded together to form the three-phase coil 24. It is also noted that six coil segments 80 are inserted into each of the slots 22s.

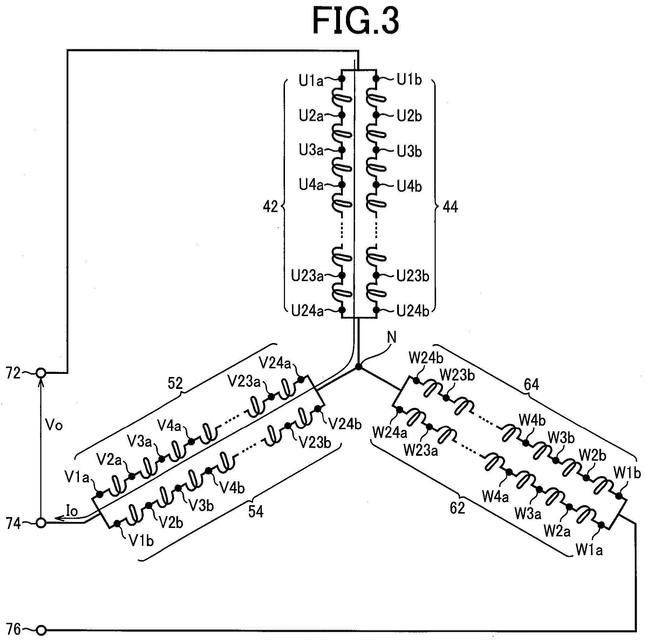

FIG. 3 is an electrical equivalent circuit diagram of the three-phase coil 24 wound around the stator core 22 of the rotary electric machine 10 according to the first embodiment of the present invention.

The three-phase coil 24 is Y-connected. The three-phase coil 24 consists of U phase coil 40, V phase coil 50 and W phase coil 60. The U phase coil 40, V phase coil 50, and W phase coil 60 each correspond to "phase coil" in the present invention. The U phase terminal 72 is an input terminal for inputting the U phase of three-phase AC to the U phase coil 40. The V phase terminal 74 is an input terminal for inputting the V phase of three-phase AC to the V phase coil 50. The W phase terminal 76 is an input terminal for inputting the W phase of three-phase AC to the W phase coil 60. Hereinafter, unless otherwise specified, the U phase coil 40, V phase coil 50, and W phase coil 60 will be referred to simply as "phase coil". Unless otherwise specified, each of the U phase terminal 72, V phase terminal 74 and W phase terminal 76 is referred to as "input terminal 70". Each of the U phase terminal 72, V phase terminal 74 and W phase terminal 76 corresponds to "input terminal" in the present invention. The U phase coil 40 has one end connected to the U phase terminal 72 and the other end connected to a neutral point N. The V phase coil 50 has one end connected to the V phase terminal 74 and the other end connected to the neutral point N. The W phase coil 60 has one end connected to the W phase terminal 76 and the other end connected to the neutral point N. The U phase coil 40 includes a first coil portion 42 and a second coil portion 44 connected in parallel between the U phase terminal 72 and the neutral point N. The V phase coil 50 includes a first coil portion 52 and a second coil portion 54 connected in parallel between the V phase terminal 74 and the neutral point N. The W phase coil 60 includes a first coil portion 62 and a second coil portion 64 connected in parallel between the W phase terminal 76 and the neutral point N. Thus, each phase coil of the three-phase coil 24 has one end connected to the input terminal 70 of each phase and the other end connected to the neutral point N, forming two parallel-connected first and second coil portions between the input terminal 70 of each phase and the neutral point N.

Here, the positions in which the coil segments 80 in the first coil portion 42 of the U phase coil 40 are received in the slots 22s are referred to as received positions U1a, U2a, U3a, U4a, ..., U23a, and U24a, as seen from the U phase terminal 72 toward the neutral point N. The positions in which the coil segments 80 in the second coil portion 44 of the U phase coil 40 are received in the slots 22s are referred to as received positions U1b, U2b, U3b, U4b, ..., U23b, and U24b, as seen from the U phase terminal 72 toward the neutral point N. The positions in which the coil segments 80 in the first coil portion 52 of the V phase coil 50 are received in the slots 22s are referred to as received positions V1a, V2a, V3a, V4a, ..., V23a, and V24a, as seen from the V phase terminal 74 toward the neutral point N. The positions in which the coil segments 80 in the second coil portion 54 of the V phase coil 50 are received in the slots 22s are represented as received positions V1b, V2b, V3b, V4b, ..., V23b, and V24b, as seen from the V phase terminal 74 toward the neutral point N. The positions in which the coil segments 80 in the first coil portion 62 of the W phase coil 60 are received in the slots 22s are represented as received positions W1a, W2a, W3a, W4a, ..., W23a, and W24a, as seen from the W phase terminal 76 toward the neutral point N. The positions in which the coil segments 80 in the second coil portion 64 of the W phase coil 60 are received in the slots 22s are represented as received positions W1b, W2b, W3b, W4b, ..., W23b, and W24b, as seen from the W phase terminal 76 toward the neutral point N. The initial letters U, V, and W in these received position notations indicate the coil segments 80 that constitute the U phase coil 40, V phase coil 50 and W phase coil 60, respectively. The numbers indicate a connection order from the input terminal 70 of each phase toward the neutral point N, and the suffixes a and b indicate the first coil portion and the second coil portion, respectively.

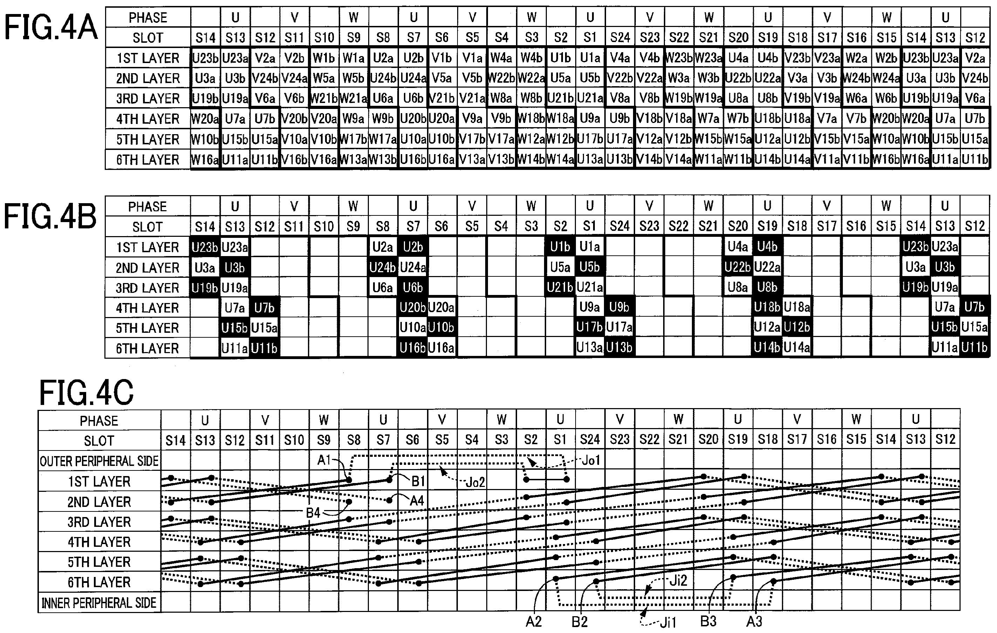

FIG. 4A-4C are views explaining a connection structure of the coil segments 80 constituting the three-phase coil 24 shown in FIG. 3, wherein FIG. 4A is a layout diagram of the coil segments 80, FIG. 4B is an explanatory diagram explaining allocation of received positions of the coil segments of the first coil portion 42 and the second coil portion 44 in the U phase coil 40, and FIG. 4C is a view explaining an outline of the connection structure of the U phase coil 40. FIGS. 5A and 5B are views explaining the connection structure of the coil segments 80 constituting the three-phase coil 24 shown in FIGS. 4A-4C, wherein FIG. 5A is a view explaining an overall structure of the connection structure of the three-phase coil 24, and FIG. 5B is a view explaining details of the connection structure of the U phase coil 40. The "connection structure" refers to the physical arrangement of the plurality of coil segments 80 that constitute the three-phase coil 24. Specifically, the "connection structure" refers to relative positional relationship of the received positions of the coil segments 80 and connection relationship between distal end portions 82t within the coil in which the plurality of coil segments 80 are connected.

The slot numbers S1 to S24 shown in FIG. 4 represent circumferential position of the 24 slots 22s, i.e., the numbers assigned sequentially to the circumferential direction. The received positions of the coil segments 80 in the radial direction are referred to as the first, second, third, fourth, fifth and sixth layers, as seen from the outer peripheral side toward the inner peripheral side. Six coil segments 80 are received in each of the 24 slots 22s. As shown in FIG. 4A, the coil segments 80 of the same phase in the three-phase coil 24 are received in the first, second and third layers in a first pair of the slots 22s which are adjacent to each other in the circumferential direction, and are received in the fourth, fifth and sixth layers in a second pair of the slots 22s which are adjacent to each other in the circumferential direction and which are shifted in the circumferential direction from the first pair of the slots 22s by a predetermined pitch at which the slots 22s are arranged in the circumferential direction, such that the coil segments 80 of the same phase includes three coil segments 80 received in the respective first, second and third layers in one of the first pair of the slots 22s, and other three coil segments 80 received in the respective fourth, fifth and sixth layers in the other of the first pair of the slots 22s, and such that the coil segments 80 of the same phase includes three coil segments 80 received in the respective first, second and third layers in one of the second pair of the slots 22s, and other three coil segments 80 received in the respective fourth, fifth and sixth layers in the other of the second pair of the slots 22s. In FIG. 4A, slots numbers S13 and S14 are examples corresponding to the above-described first pair of the slots 22s, and slots numbers S12 and S13 are examples corresponding to the above-described second pair of the slots 22s. In FIG. 4A, the received positions of the coil segments 80 of the same phase, i.e., the above-described first and second pairs of the slots 22s, are surrounded by a thick solid line. Hereinafter, each area surrounded by this thick solid line will be referred to as the "same-phase received area". The received positions of the coil segments 80 that constitute the three-phase coil 24 are expressed by identifying the slot numbers S1 to S24 and the first through sixth layers that indicate their radial positions. For example, the received positions U1a, U2a, U3a, U4a, ..., U23a, U24a in which the coil segments 80 of the first coil portion 42 of the U phase coil 40 are received in the slots 22s represented by specifying one of the slot numbers S1 to S24 that indicate the position of the circumferential direction and one of the first through sixth layers that indicate the position of the radial direction.

In the circumferential direction, a V-phase same-phase receiving area is located adjacent to a U-phase same-phase receiving area. In the circumferential direction, a W-phase same-phase receiving area is located adjacent to the V-phase same-phase receiving area. In the circumferential direction, the U-phase same-phase receiving area is located adjacent to the W-phase same-phase receiving area. In this way, the U-phase, V-phase and W-phase same-phase receiving areas are repeatedly arranged adjacent to each other in the circumferential direction.

In each of the U-phase same-phase receiving area, V-phase same-phase receiving area and W-phase same-phase receiving area, the received positions of the coil segments 80 of the first coil portion and the received positions of the coil segments 80 of the second coil portion are assigned. These assignments are identical in the U-phase same-phase receiving area, V-phase same-phase receiving area and W-phase same-phase receiving area. Therefore, the following describes the assignment of the received positions of the coil segments 80 of the first coil portion 42 and the second coil portion 44 in the same-phase received area of the U phase coil 40 as a representative example, and explanations for other phases are omitted.

FIG. 4B omits the received positions of the coil segments 80 of the V phase coil 50 and W phase coil 60 from FIG. 4A, and shows only the received positions of the coil segments 80 of the U phase coil 40. Further, so as to make it easier to distinguish between the received positions of the coil segments 80 of the first coil portion 42 and the second coil portion 44, the received positions of the coil segments 80 of the second coil portion 44 are indicated by white-on-black text. As shown in FIG. 4B, within each same-phase received area, in the first through sixth layers, the received positions of the coil segments 80 of the first coil portion 42 and the second coil portion 44 are adjacent in the circumferential direction. In each same-phase received area, the slots 22s in which only the coil segments 80 of the U phase coil 40 are received, one of the received positions of the coil segments 80 of the first coil portion 42 and the second coil portion 44 corresponds to the first, third, fourth and sixth layers, while the other corresponds to the second and fifth layers. In two same-phase received areas adjacent to each other in the circumferential direction, the received positions of the coil segments 80 of the first coil portion 42 and the received positions of the coil segments 80 of the second coil portion 44 are opposed to each other in the circumferential direction in each of the first through sixth layers.

As shown in FIGS. 4 and 5, the V phase coil 50 has the same connection structure as the U phase coil 40, but the connection structure is shifted leftward (as seen in FIGS. 4 and 5) by four times as large as the above-described pitch of the slots 22s in the circumferential direction. The W phase coil 60 has the same connection structure as the U phase coil 40, but the connection structure is shifted leftward by eight times as large as the pitch of the slots 22s in the circumferential direction. Further, in the first coil portion 42 and second coil portion 44 of the U phase coil 40, the coil segments 80 connected in the same order from the U phase terminal 72 are received the slots 22s adjacent in the circumferential direction. Therefore, the following description will focus on the connection structure of the coil segments 80 of the first coil portion 42, and explanation of the other connection structures will be omitted where appropriate. It is noted that the above-described pitch of the slots 22s (at which the slots 22s are arranged in the circumferential direction) is a distance between centers of adjacent slots 22s in the circumferential direction.

In FIG. 4C, broken lines represent the bridge portion 84 side of the coil segments 80, and solid lines represent the distal end portion 82t side, i.e., the welded portion 88 side of the coil segments 80. The same is true for FIGS. 5A and 5B. For example, in the first coil portion 42, a pair of the arm portions 82 of the coil segment 80 are received in the first layer of slot number S1 and the first layer of slot number S8, and a pair of the arm portions 82 of the coil segment 80 are received in the second layer of slot number S14 and the first layer of slot number S20. Then, the distal end portion 82t received in the first layer of slot number S1 is connected to the U phase terminal 72, and the distal end portion 82t received in the first layer of slot number S8 and the distal end portion 82t received in the second layer of slot number S14 are electrically connected by welding.

As shown in FIGS. 4C and 5B, the first coil portion 42 has an outer-peripheral-end connection portion Jo1, an inward winding portion 42a, an outward winding portion 42b and an inner-peripheral-end connection portion Ji1 that connects between an inner-peripheral-side end portion of the inward winding portion 42a and an inner-peripheral-side end portion of the outward winding portion 42b. The inward winding portion 42a is a portion in which the coil segments 80 are connected from the outer peripheral side (connected to the U phase terminal 72) toward the inner peripheral side. The outward winding portion 42b is a portion in which the coil segments 80 are connected from the inner peripheral side toward the outer peripheral side (connected to the neutral point N). In the inward winding portion 42a, the phrase "from the outer peripheral side toward the inner peripheral side" means that connections of the coil segments 80 as a whole start in the first layer and end in the sixth layer. This does not exclude intermediate connections from the second layer to the first layer, from the fourth layer to the third layer, or from the sixth layer to the fifth layer, as in an outer-layer connection portion Ro, an intermediate-layer connection portion Rm and an inner-layer connection portion Ri that will be described later. In the outward winding portion 42b, the phrase "from the inner peripheral side to the outer peripheral side" means that connections of the coil segments 80 as a whole start in the sixth layer and end in the first or second layer. This does not exclude intermediate connections from the first layer to the second layer, from the third layer to the fourth layer, or from the fifth layer to the sixth layer, as in the outer-layer connection portion Ro, the intermediate-layer connection portion Rm and the inner-layer connection portion Ri that will be described later.

Each of the inward winding portion 42a and the outward winding portion 42b includes the outer-layer connection portion Ro, an outer-layer-side transfer portion SWo, the intermediate-layer connection portion Rm, an inner-layer-side transfer portion SWi and the inner-layer connection portion Ri. The outer-layer connection portion Ro is a portion in which the coil segments 80 are received alternately in the first and second layers and connected such that the coil segments 80 extend in the circumferential direction. The intermediate-layer connection portion Rm is a portion in which the coil segments 80 are received alternately in the third and fourth layers and connected such that the coil segments 80 extend in the circumferential direction. The inner-layer connection portion Ri is a portion in which the coil segments 80 are received alternately in the fifth and sixth layers and connected such that the coil segments 80 extend in the circumferential direction. The outer-layer-side transfer portion SWo is a portion connecting between the second layer that is an end portion of the outer-layer connection portion Ro and the third layer that is an end portion of the intermediate-layer connection portion Rm. The inner-layer-side transfer portion SWi is a portion connecting between the fifth layer that is an end portion of the inner-layer connection portion Ri and the fourth layer that is an end portion of the intermediate-layer connection portion Rm. In the outer-layer connection portion Ro, an end is connected to the U phase terminal 72, and the other end is connected to the intermediate-layer connection portion Rm via the outer-layer-side transfer portion SWo. In the inner-layer connection portion Ri, an end is connected to the inner-peripheral-end connection portion Ji1, and the other end is connected to the intermediate-layer connection portion Rm via the inner-layer-side transfer portion SWi.

An inward-winding start position A1 is the received position of one of the coil segments 80 in one of the first and second layers at the first connection from the one of the first and second layers to the other in the outer-layer connection portion Ro of the inward winding portion 42a. The inward-winding start position A1 corresponds to "winding start position" in the present invention. Specifically, the inward-winding start position A1 is the first layer of the slot number S8, which is shifted leftward (as seen in FIGS. 5A and 5B) from the slot number S1 (to which the U phase terminal 72 is connected by the outer-peripheral-end connection portion Jo1) by seven times as large as the above-described pitch of the slots 22s in the circumferential direction. An inward-winding end position A2 is the received position of one of the coil segments 80 in the sixth layer at the last connection from the fifth to sixth layer in the inner-layer connection portion Ri of the inward winding portion 42a. An outward-winding start position A3 is the received position of one of the coil segments 80 in the sixth layer at the first connection from the sixth to fifth layer in the inner-layer connection portion Ri of the outward winding portion 42b. The inward-winding end position A2 corresponds to "inner-peripheral-side end portion of the inward winding portion" in the present invention. The outward-winding start position A3 corresponds to "inner-peripheral-side end portion of the outward winding portion" in the present invention. An outward-winding end position A4 is the received position of one of the coil segments 80 in the above-described other of the first and second layers at the last connection from the above-described one of the first and second layers to the other in the outer-layer connection portion Ro of the outward winding portion 42b.

The outer-peripheral-end connection portion Jo1 is a portion in which the coil segments 80 are disposed between the U phase terminal 72 and the inward-winding start position A1, and connects between the coil segments 80 received in the first layer. Specifically, the outer-peripheral-end connection portion Jo1 between the first layer of the slot number S1 and the first layer of the slot number S8. The inner-peripheral-end connection portion Ji1 is a portion in which the coil segments 80 are disposed between the inward-winding end position A2 and the outward-winding start position A3.

The second coil portion 44 has an outer-peripheral-end connection portion Jo2, an inward winding portion 44a, an outward winding portion 44b and an inner-peripheral-end connection portion Ji2, which are substantially the same in configuration as the above-described outer-peripheral-end connection portion Jo1, inward winding portion 42a, outward winding portion 42b and inner-peripheral-end connection portion Ji1 of the first coil portion 42, respectively.

An inward-winding start position B1 is the received position of one of the coil segments 80 in one of the first and second layers at the first connection from the one of the first and second layers to the other in the outer-layer connection portion Ro of the inward winding portion 44a. The inward-winding start position B1 corresponds to "winding start position" in the present invention. Specifically, the inward-winding start position B1 is the first layer of the slot number S7, which is shifted leftward (as seen in FIGS. 5A and 5B) from the slot number S2 (to which the U phase terminal 72 is connected by the outer-peripheral-end connection portion Jo2) by five times as large as the above-described pitch of the slots 22s in the circumferential direction. An inward-winding end position B2 is the received position of one of the coil segments 80 in the sixth layer at the last connection from the fifth to sixth layer in the inner-layer connection portion Ri of the inward winding portion 44a. The inward-winding end position B2 corresponds to "inner-peripheral-side end portion of the inward winding portion" in the present invention. An outward-winding start position B3 is the received position of one of the coil segments 80 in the sixth layer at the first connection from the sixth to fifth layer in the inner-layer connection portion Ri of the outward winding portion 44b. The outward-winding start position B3 corresponds to "inner-peripheral-side end portion of the outward winding portion" in the present invention. An outward-winding end position B4 is the received position of one of the coil segments 80 in the above-described other of the first and second layers at the last connection from the above-described one of the first and second layers to the other in the outer-layer connection portion Ro of the outward winding portion 44b. The inner-peripheral-end connection portion Ji2 is a portion in which the coil segments 80 are disposed between the inward-winding end position B2 and the outward-winding start position B3.

Like the U phase coil 40, the V phase coil 50 includes a first coil portion 52 and a second coil portion 54, and the W phase coil 60 includes a first coil portion 62 and a second coil portion 64. The first coil portion 52 of the V phase coil 50 has the outer-peripheral-end connection portion Jo1, an inward winding portion 52a, an outward winding portion 52b and the inner-peripheral-end connection portion Ji1 (that connects between the inner-peripheral-side end portions of the inward winding portion 52a and the outward winding portion 52b), which have configurations corresponding to those of the outer-peripheral-end connection portion Jo1, inward winding portion 42a, outward winding portion 42b and the inner-peripheral-end connection portion Ji1 of the first coil portion 42 of the U phase coil 40. The second coil portion 54 of the V phase coil 50 has the outer-peripheral-end connection portion Jo2, an inward winding portion 54a, an outward winding portion 54b and the inner-peripheral-end connection portion Ji2 (that connects between the inner-peripheral-side end portions of the inward winding portion 54a and the outward winding portion 54b), which have configurations corresponding to those of the outer-peripheral-end connection portion Jo2, inward winding portion 44a, outward winding portion 44b and the inner-peripheral-end connection portion Ji2 of the second coil portion 44 of the U phase coil 40. The first coil portion 62 of the W phase coil 60 has the outer-peripheral-end connection portion Jo1, an inward winding portion 62a, an outward winding portion 62b and the inner-peripheral-end connection portion Ji1 (that connects between the inner-peripheral-side end portions of the inward winding portion 62a and the outward winding portion 62b), which have configurations corresponding to those of the outer-peripheral-end connection portion Jo1, inward winding portion 42a, outward winding portion 42b and the inner-peripheral-end connection portion Ji1 of the first coil portion 42 of the U phase coil 40. The second coil portion 64 of the W phase coil 60 has the outer-peripheral-end connection portion Jo2, an inward winding portion 64a, an outward winding portion 64b and the inner-peripheral-end connection portion Ji2 (that connects between the inner-peripheral-side end portions of the inward winding portion 64a and the outward winding portion 64b), which have configurations corresponding to those of the outer-peripheral-end connection portion Jo2, inward winding portion 44a, outward winding portion 44b and the inner-peripheral-end connection portion Ji2 of the second coil portion 44 of the U phase coil 40.

The circumferential extending of the coil segments 80 in the inward winding portion 42a is opposite to the circumferential extending of the coil segments 80 in the outward winding portion 42b. Specifically, as shown in FIGS. 4 and 5, the outer-layer connection portion Ro in the inward winding portion 42a extends leftward as the slot number S8 (U2a) → S14 (U3a) → S20 (U4a) → S2 (U5a), while the outer-layer connection portion Ro in the outward winding portion 42b extends rightward as slot number S19 (U22a) → S13 (U23a) → S7 (U24a). Similarly, the intermediate-layer connection portion Rm in the inward winding portion 42a extends leftward, while the intermediate-layer connection portion Rm in the outward winding portion 42b extends rightward. Similarly, the inner-layer connection portion Ri in the inward winding portion 42a extends leftward, while the inner-layer connection portion Ri in the outward winding portion 42b extends rightward. It is noted that each of the inward winding portion 42a and the outward winding portion 42b has a double-helix connection structure in the outer-layer connection portion Ro, the intermediate-layer connection portion Rm and the inner-layer connection portion Ri. The "double-helix" refers to a state in which two lines connecting the coil segments 80 form parallel spirals.

Regarding the connection order of the coil segments 80 as seen from side of the U phase terminal 72, the connection of the coil segments 80 received in the third layer is made after the outer-layer connection portion Ro in the inward winding portion 42a. That is, the connection of the coil segments 80 received in the third layer as seen from side of the U phase terminal 72 is made after the outer-layer connection portion Ro of the inward winding portion 42a has been caused to extend in the circumferential direction, or alternatively, after the outer-layer connection portion Ro of the inward winding portion 42a has been caused to extend in the circumferential direction and the inner-layer connection portion Ri of the outward winding portion 42b has been caused to extend in the circumferential direction. The connection of the coil segments 80 received in the fourth layer is made after the outer-layer connection portion Ro in the inward winding portion 42a. That is, the connection of the coil segments 80 received in the fourth layer as seen from side of the U phase terminal 72 is made after the outer-layer connection portion Ro of the inward winding portion 42a has been caused to extend in the circumferential direction, or alternatively, after the outer-layer connection portion Ro of the inward winding portion 42a has been caused to extend in the circumferential direction and the inner-layer connection portion Ri of the outward winding portion 42b has been caused to extend in the circumferential direction. Thus, the connection of the coil segments 80 received in the third layer as seen from side of the U phase terminal 72 and the connection of the coil segments 80 received in the fourth layer as seen from side of the U phase terminal 72 are both made after the outer-layer connection portion Ro in the inward winding portion 42a has been caused to extend in the circumferential direction. In other words, the coil segments 80 received in the third and fourth layers are electrically connected to the U phase terminal 72 via the coil segments 80 received in the outer-layer connection portion Ro in the inward winding portion 42a.

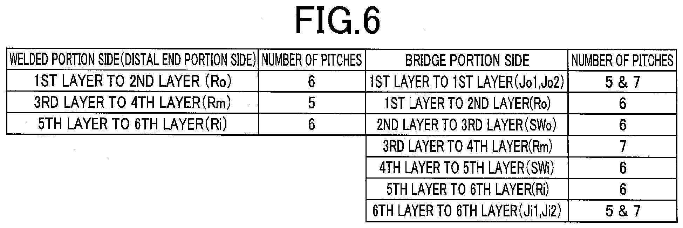

FIG. 6 is a view explaining types of coil segments 80 used to constitute the three-phase coil 24 shown in FIG. 4A-4C.

In the outer-layer connection portion Ro and the inner-layer connection portion Ri, a number of pitches on side of the bridge portion 84 and a number of pitches on side of the welded portion 88 of the coil segments 80 are both 6, wherein the number of pitches on side of the bridge portion 84 is represented by each broken line shown in FIGS. 4 and 5, and corresponds to a circumferential distance between two slots 22s that are connected by the pair of arm potions 82 of a corresponding one of the coil segments 80, and wherein the number of pitches on side of the welded portion 88 is represented by each solid line shown in FIGS. 4 and 5, and corresponds to a circumferential distance between two slots 22s that are connected by the arm portions 82 of a corresponding circumferentially adjacent pair of the coil segments 80 that are connected to each other by welding. In the intermediate-layer connection portion Rm, the number of pitches on side of the bridge portion 84 of the coil segments 80 is 7, while the number of pitches on side of the welded portion 88 of the coil segments 80 is 5. In the outer-layer-side transfer portion SWo and the inner-layer-side transfer portion SWi, the number of pitches on side of the bridge portion 84 of the coil segments 80 is 6. In the coil segments 80 in each of which the pair of arm portions 82 are both received in the first layer, the numbers of pitches on side of the bridge portion 84 are 5 and 7. Similarly, in the coil segments 80 in each of which the pair of arm portions 82 are both received in the sixth layer, the numbers of pitches on side of the bridge portion 84 are 5 and 7.

FIGS. 7A-7C are views explaining a maximum value of a voltage difference between adjacent coil segments 80 in the same slots 22s in the three-phase coil 24 shown in FIG. 5A and 5B, wherein FIG. 7A is a view explaining a relationship between the voltage difference between the adjacent coil segments 80 and a connection order of the coil segments 80 as seen from side of the input terminal 70, FIG. 7B is a view showing the voltage difference between the adjacent coil segments 80, and FIG. 7C is a view showing the connection order of the coil segments 80 as seen from side of the input terminal 70 and the voltage difference between the adjacent coil segments 80 where the coil segments 80 of different phases are adjacent in the same slots 22s.

As shown in FIG. 7A, the coil segments 80 are arranged such that two kinds of slots 22s are alternately arranged in the circumferential direction, wherein each first slot 22s (as one of the two kinds of slots 22s) receive therein 6 coil segments 80 of the same phase, while each second slot 22s (as the other of the two kinds of slots 22) receive therein 3 coil segments 80 of one of three phases and other 3 coil segments 80 of another one of three phases. In FIG. 7A, received positions in which adjacent coil segments 80 of different phases are received within the same slots 22s are indicated by white-on-black text.

Hereinafter, with reference to FIG. 3, there will be described the voltage difference between adjacent coil segments 80 within the same slots 22s. When the rotary electric machine 10 is driven to be rotated, three-phase AC voltage is applied to the U phase terminal 72, V phase terminal 74 and W phase terminal 76. The voltage difference between adjacent coil segments 80 within the same slots 22s is, between the coil segments 80 of the U phase coil 40, between the coil segments 80 of the V phase coil 50, between the coil segments 80 of the W phase coil 60, between the coil segments 80 of the U phase coil 40 and the V phase coil 50, between the coil segments 80 of the V phase coil 50 and the W phase coil 60, and between the coil segments 80 of the W phase coil 60 and the U phase coil 40. The voltage difference can be calculated by using different approaches when it is between the coil segments 80 of the same phase and when it is between the coil segments 80 of different phases. Therefore, there will be described a case between the coil segments 80 of the U phase coil 40 and a case between the coil segments 80 of the U phase coil 40 and the V phase coil 50, as representative examples.

For easier understanding, the following description will be simplified by assuming that the coil segments 80 is wound around the stator core 22 that is made of electromagnetic steel sheet, and function as ideal inductive reactance. That is, resistance and capacitive reactance components of the coil segments 80 are both sufficiently small as compared to the inductive reactance component and can be ignored. Further, when the plurality of coil segments 80 are connected, the inductive reactance components of the coil segments 80 on side of the bridge portion 84 and on side of the welded portion 88 are assumed to be the same. Here, an impedance, which is the inductive reactance between the U phase terminal 72 and the V phase terminal 74, is defined as impedance Z1 [Ω].

Between the U phase terminal 72 and the neutral point N, there are a total of 23 connections consisting of 12 bridge-portion-side connections and 11 welded-portion-side connections, which are alternately arranged. In each of the 12 bridge-portion-side connections, the connection is made by the bridge portion 84 of corresponding one of the coil segments 80. In each of the 11 welded-portion-side connections, the connection is made by cooperation of the distal end portions 82t (welded portions 88) of a corresponding pair of the coil segments 80 that are welded to each other. The same is true between the V phase terminal 74 and the neutral point N.

For example, when a voltage Vo [V] is applied to the U phase terminal 72 relative to the V phase terminal 74, a current Io (= Vo/Z1) [A] flows between the U phase terminal 72 and the V phase terminal 74. In this case, (1/46 × Vo) [V] is applied onto side of the bridge portion 84 side and side of welded portion 88 of the coil segments 80 between the U phase terminal 72 and the V phase terminal 74. In the U phase coil 40, the electric potential is reduced by (1/46 × Vo) [V] with each increase in the connection order as seen from side of the U phase terminal 72 toward the neutral point N. In the V phase coil 50, the electric potential is increased by (1/46 × Vo) [V] with each increase in the connection order as seen from side of the V phase terminal 74 toward the neutral point N.

First, there will be described a case in which adjacent coil segments 80 in the same slots 22s are the same phase, for example, a case in which one coil segment 80 of the U phase coil 40 received in connection order Nu1 is adjacent to another coil segment 80 of the U phase coil 40 received in connection order Nu2. The connection orders Nu1 and Nu2 are equivalent to the numerical portion of the received position (U1a-U24a, U1b-U24b). In this case, the voltage difference between the adjacent coil segments 80 is calculated by multiplying the difference in the connection order (|Nu1-Nu2|) from the U phase terminal 72 (which is the input terminal common to the adjacent coil segments 80) toward the neutral point N, by (1/46 × Vo) [V]. It is noted that the maximum value of the difference in connection order of the adjacent coil segments 80 of the same phase as seen from side of the common input terminal 70 toward the neutral point N is 23, which is a difference between the maximum value (=24) and the minimum value (=1) of the connection order.

Next, there will be described a case in which adjacent coil segments 80 in the same slot 22s are of different phase, for example, a case in which one coil segment 80 of the U phase coil 40 received in connection order Nu3 is adjacent to another coil segment 80 of the V phase coil 50 received in connection order Nv3. The connection order Nu3 is equivalent to the numerical portion of the received position (U1a-U24a, U1b-U24b). The connection order Nv3 is equivalent to the numerical portion of the received position (V1a-V24a, V1b-V24b). In this case, a total number of the bridge portions 84 and the welded portions 88 of coil segments 80, which are located between the received position of one coil segment 80 and the received position of another coil segment 80, is defined as total T. A total number of the bridge-portion-side connections and welded-portion-side connections of the coil segments 80, which are made in series between the neutral point N and the received position of one coil segment 80 of the U phase coil 40, is defined as "number Xu". A total number of the bridge-portion-side connections and welded-portion-side connections of the coil segments 80, which are made in series between the neutral point N and the received position of another coil segment 80 of the V phase coil 50, is defined as number Xv. The "number Xu" is equal to a difference {= 23-(Nu3-1)} between a sum (= 23) of the bridge-portion-side connections and welded-portion-side connections of the coil segments 80 connected in series between the U phase terminal 72 and the neutral point N and a number obtained by subtracting 1 from the connection order Nu3 of the received position of one coil segment 80. The number Xv is equal to a difference {= 23-(Nv3-1)} between a sum (= 23) of the bridge-portion-side connections and welded-portion-side connections of the coil segments 80 connected in series between the V phase terminal 74 and the neutral point N and a number obtained by subtracting 1 from the connection order Nv3 of the received position of another coil segment 80. The total T is a sum (= Xu+Xv) of the "number Xu" and number Xv. Therefore, the total T is a difference {= 48-(Nu3+Nv3)} between 48 and a sum of the connection order Nu3 and the connection order Nv3. Where the coil segment 80 of the U phase coil 40 and the coil segment 80 of the V phase coil 50 are adjacent to each other in the same slot 22s, the voltage difference between the adjacent coil segments 80 is calculated by multiplying the total T by (1/46 × Vo) [V]. The voltage difference can be calculated in a similar manner also where the coil segment 80 of the V phase coil 50 and the coil segment 80 of the W phase coil 60 are adjacent to each other in the same slot 22s, and also where the coil segment 80 of the W phase coil 60 and the coil segment 80 of the U phase coil 40 are adjacent to each other in the same slot 22s.

Referring back to FIGS. 7A-7C, for example, the coil segments 80 received in received positions U23b and U3a are adjacent in the same slots 22s. The voltage difference between the adjacent coil segments 80 is a value (=20/46 × Vo) that is obtained by multiplying a difference (20) (=23-3) in the connection order from the common U phase terminal 72 toward the neutral point N, by (1/46 × Vo) [V]. For example, the coil segments 80 received in received positions V6a and U7b are adjacent in the same slots 22s. The voltage difference between the adjacent coil segments 80 is a value (=35/46×Vo) that is obtained by subtracting a sum (=13) of the connection order (= 7) of the coil segment 80 received in the received position U7b and the connection order (= 6) of the coil segment 80 received in the received position V6a, from 48, and then by multiplying it by (1/46×Vo) [V].

FIG. 7B shows numbers each of which is related to the voltage difference between adjacent coil segments 80 in the same slot 22s, wherein each number shown in FIG. 7B is obtained by diving the voltage difference by (1/46 × Vo) [V]. The larger the number in FIG. 7B, the larger the voltage difference between adjacent coil segments 80. The voltage difference between the coil segments 80 received in the third and fourth layers of slot number S12, and the voltage difference between the coil segments 80 received in the third and fourth layers of slot number S16, are both maximum values (= 35/46 × Vo). In FIG. 7B, the areas in which the voltage difference between adjacent coil segments 80 is at its maximum are shown in white-on-black text. As described above, when the coil segments 80 of the same phase are adjacent within the same slots 22s, the maximum value of the voltage difference between the adjacent coil segments 80 divided by (1/46 × Vo) [V] is 23.

FIG. 7C is a view showing the connection order of the coil segments 80 as seen from side of the input terminal 70 of each phase and the voltage difference between adjacent coil segments 80 where the coil segments 80 of different phases are adjacent in the same slots 22s.

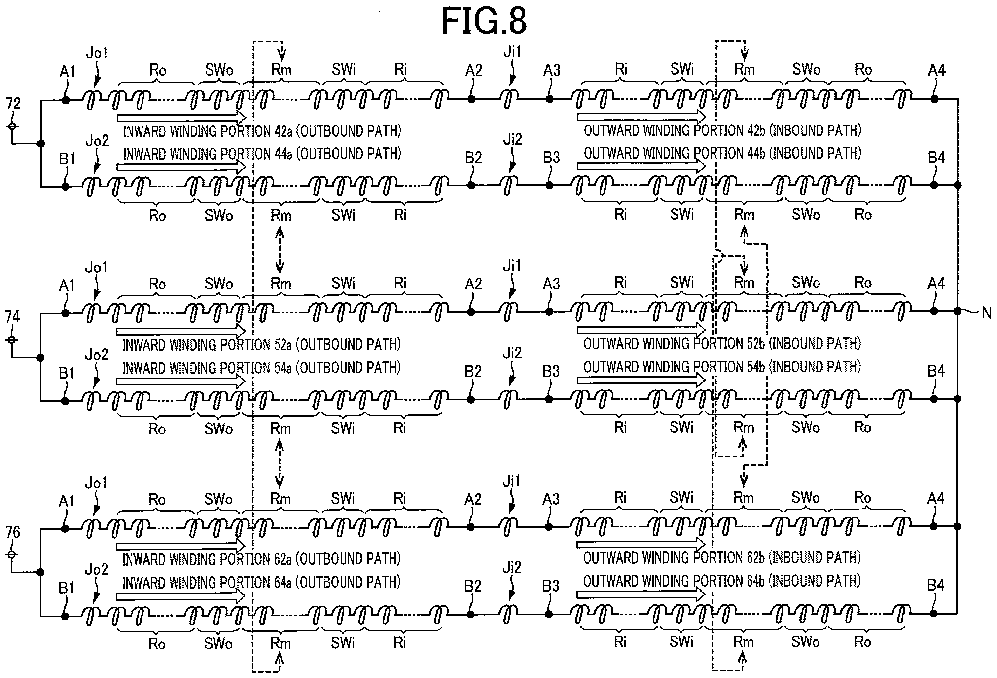

FIG. 8 is a view explaining a positional relationship among the coil segments 80 in the three-phase coil 24 where the coil segments 80 of different phases are adjacent in the same slots 22s in the three-phase coil 24 shown in FIGS. 5A and 5B.

As shown in FIG. 8, the first coil portion 42 and the second coil portion 44 are connected in parallel between the U phase terminal 72 and the neutral point N. In the first coil portion 42, the outer-peripheral-end connection portion Jo1, the inward winding portion 42a, the inner-peripheral-end connection portion Ji1 and the outward winding portion 42b are connected in series in this order from the U phase terminal 72 toward the neutral point N. In the second coil portion 44, the outer-peripheral-end connection portion Jo2, the inward winding portion 44a, the inner-peripheral-end connection portion Ji2 and the outward winding portion 44b are connected in series in this order from the U phase terminal 72 toward the neutral point N. Where the inward winding portion 42a and the inward winding portion 44a are regarded as an outbound path from the outer peripheral side toward the inner peripheral side, the outward winding portion 42b and the outward winding portion 44b are regarded as an inbound path from the inner peripheral side toward the outer peripheral side. Between the V phase terminal 74 and the neutral point N, the first coil portion 52 and the second coil portion 54 are connected in parallel with the similar connection structure. Between the W phase terminal 76 and the neutral point N, the first coil portion 62 and the second coil portion 64 are connected in parallel with the similar connection structure.

Where the coil segments 80 of different phases are adjacent within the same slots 22s, the adjacent coil segments 80 are a combination of coil segments 80 received in the third layer and coil segments 80 received in the fourth layer. Regarding the connection order of the coil segments 80 as seen from side of the input terminal 70 of each phase, the connection to the coil segments 80 received in the third layer is made after the outer-layer connection portion Ro of the inward winding portion of each phase coil. In other words, the coil segments 80 received in the third layer are connected after the outer-layer connection portion Ro of the inward winding portion of each phase coil has been caused to extend in the circumferential direction, as seen from the input terminal 70 of each phase. Regarding the connection order of the coil segments 80 as seen from side of the input terminal 70 of each phase, the connection to the coil segments 80 received in the fourth layer is made after the outer-layer connection portion Ro of the inward winding portion of each phase coil. In other words, the coil segments 80 received in the fourth layer are connected after the outer-layer connection portion Ro of the inward winding portion of each phase coil has been caused to extend in the circumferential direction, as seen from the input terminal 70 of each phase. In FIG. 8, where the coil segments 80 of different phases are adjacent within the same slots 22s, the positional relationship between those adjacent coil segments 80 is indicated by broken arrows.

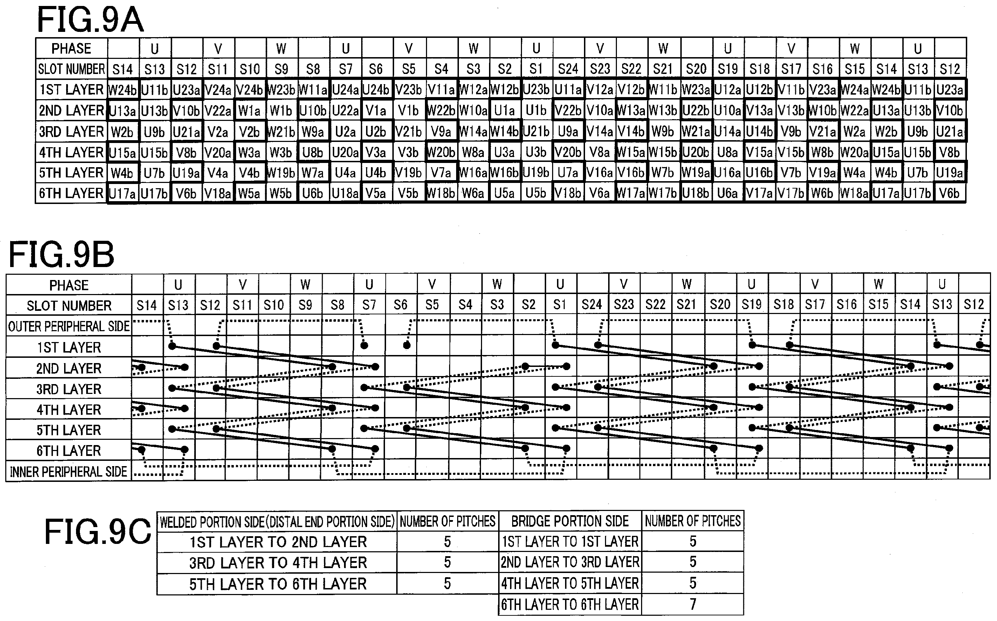

FIGS. 9A-9C are views explaining a connection structure of coil segments 80 constituting a three-phase coil 824 of comparative example 1, wherein FIG. 9A is a layout diagram of the coil segments 80, FIG. 9B is a view explaining an outline of the connection structure of a U phase coil 840, and FIG. 9C is a view explaining types of coil segments 80 used to constitute the three-phase coil 824. The three-phase coil 824 has substantially the same construction as the three-phase coil 24 in the above-described first embodiment, except that the U phase coil 40, V phase coil 50 and W phase coil 60 are replaced by the U phase coil 840, V phase coil 850 and W phase coil 860, respectively. In this comparative example, the description will be focused on parts that are different from those of the first embodiment, and parts that are substantially common in function to those of the first embodiment will be given the same reference numerals and explanations will be omitted as appropriate.

As shown in FIG. 9A, in the three-phase coil 824, the coil segments 80 of the same phase include 6 coil segments 80 received in the first through sixth layers of each of odd-numbered slots 22s having slot numbers of odd numbers, 3 coil segments received in the first, third and fifth layers of each slot 22s which is located on one of circumferentially opposite sides of a corresponding one of the odd-numbered slots 22s, and 3 coil segments received in the second, fourth and sixth layers of each slot 22s which is located on the other of the circumferentially opposite sides of the corresponding one of the odd-numbered slots 22s. In the FIG. 9A, each area of the received positions in which the coil segments 80 of the same phase is surrounded by thick solid line.

As shown in FIG. 9A, the V phase coil 850 has the same connection structure as the U phase coil 840, but the connection structure is shifted leftward (as seen in FIG. 9A) by four times as large as the above-described pitch of the slots 22s in the circumferential direction. The W phase coil 860 has the same connection structure as the U phase coil 840, but the connection structure is shifted leftward by eight times as large as the pitch of the slots 22s in the circumferential direction. Therefore, the following description will focus on the connection structure of the coil segments 80 of a first coil portion 842 and a second coil portion 844 of the U phase coil 840, and explanation of the other connection structures will be omitted where appropriate.

As shown in FIG. 9B, the first coil portion 842 has the coil segments 80 each of which is received at the pair of arm portions 82 on side of the bridge portion 84 in the first layer, the coil segments 80 each of which is received at the pair of arm portions 82 in the second and third layers and the coil segments 80 each of which is received at the pair of arm portions 82 in the fourth and fifth layers, and includes a portion in which the distal end portions 82t of the coil segments 80 are sequentially connected in a zigzag pattern from the outer peripheral side toward the inner peripheral side. The first coil portion 842 has the coil segments 80 each of which is received at the pair of arm portions 82 on side of the bridge portion 84 in the sixth layer, the coil segments 80 each of which is received at the pair of arm portions 82 in the fifth and fourth layers and the coil segments 80 each of which is received at the pair of arm portions 82 in the third and second layers, and includes a portion in which the distal end portions 82t of the coil segments 80 are sequentially connected in a zigzag pattern from the inner peripheral side toward the outer er peripheral side. Thus, in the first coil portion 842, a structure in which the portion connected in the zigzag pattern from the outer peripheral side to the inner peripheral side and the portion connected in the zigzag pattern from the inner peripheral side to the outer peripheral side are connected together is considered as one unit, and this structure is repeated in the circumferential direction. The same is true for the second coil portion 844.

As shown in FIG. 9C, a number of pitches on side of the bridge portion 84 of the coil segments 80 which are received in the sixth layer is 7, and a number of pitches on side of the bridge portion 84 and a number of pitches on side of the welded portion 88 of the other coil segments 80 are both 5, wherein the number of pitches on side of the bridge portion 84 is represented by each broken line shown in FIG. 9B, and the number of pitches on side of the welded portion 88 is represented by each solid line shown in FIG. 9B. Thus, 2 types of the coil segments 80 are used to constitute the three-phase coil 824.

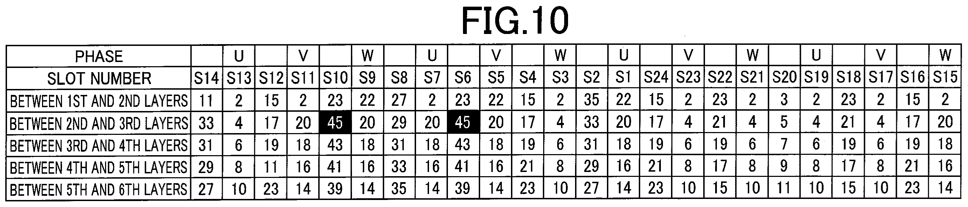

FIG. 10 is a view explaining a maximum value of a voltage difference between adjacent coil segments in the same slot 22s in the three-phase coil 824 shown in FIGS. 9A-9C, and showing the voltage difference between the adjacent coil segments 80, wherein each number shown in FIG. 10 is obtained by diving the voltage difference by (1/46 × Vo) [V].

As shown in FIG. 10, the voltage difference between the coil segments 80 received in the second and third layers of slot number S10, and the voltage difference between the coil segments 80 received in the second and third layers of slot number S6, are both maximum values (= 45/46 × Vo). In FIG. 10, the areas in which the voltage difference between adjacent coil segments 80 is at its maximum are shown in white-on-black text. In the above-described first embodiment, the maximum value of the voltage difference between adjacent coil segments 80 in the same slots 22s is reduced by approximately 22.2 [%] {= 1-(35/45)} as compared to the comparative example 1.

In the present embodiment, (a) the number of the slots 22s is six times the number of poles of the rotor 30, (b) each of the slots 22s receives therein six of the coil segments 80 such that the received six coil segments 80 are located in respective received positions located in the first, second, third, fourth, fifth and sixth layers as seen from the outer peripheral side of the stator core 22 toward the inner peripheral side, wherein the coil segments 80 of the same phase are received in the first, second and third layers in the first pair of the slots 22s which are adjacent to each other in the circumferential direction, and are received in the fourth, fifth and sixth layers in the second pair of the slots 22s which are adjacent to each other in the circumferential direction and which are shifted in the circumferential direction from the first pair of the slots 22s by the predetermined pitch, such that the coil segments 80 received in the third and fourth layers in a same one of the slots 22s, which is common to both of the first and second pairs of the slots 22s, are of different phases, (c) the phase coil of each phase in the three-phase coil 24 includes the inward winding portion (e.g., inward winding portion 42a) in which the coil segments 80 are connected from the outer peripheral side toward the inner peripheral side, the outward winding portion (e.g., outward winding portion 42b) in which the coil segments 80 are connected from the inner peripheral side toward the outer peripheral side, and the connection portion (e.g., inner-peripheral-end connection portion Ji1) connecting between the inner-peripheral-side end portion of the inward winding portion and the inner-peripheral-side end portion of the outward winding portion, (d) each of the inward winding portion and the outward winding portion includes the outer-layer connection portion Ro in which the coil segments 80 extending in the circumferential direction are connected in the first and second layers, and (e) regarding the connection order of the coil segments 80 as seen from side of the input terminal of the phase coil, the connection of the coil segments 80 received in the third layer and the connection of the coil segments 80 received in the fourth layer are made after the outer-layer connection portion Ro in the inward winding portion. In the three-phase coil 24, where the coil segments 80 of the phase coil of the same phase are adjacent in the same slots 22s, the larger a difference (= |Nu1-Nu2|) in the connection order as seen from side of the input terminal 70 common to those adjacent coil segments 80, the larger the electric voltage applied between those adjacent coil segments 80. In the three-phase coil 24, where the coil segments 80 of the phase coil of different phases are adjacent in the same slots 22s, the smaller the sum (= Nu3+Nv3) of the connection orders as seen from side of the input terminal 70 of each phase of those adjacent coil segments 80, the greater the electric voltage applied between those adjacent coil segments 80. In the present embodiment, the maximum value of the voltage difference between adjacent coil segments 80 in the same slots 22s is an issue in a case in which the coil segments 80 of the phase coils of different phases are adjacent in the same slots 22s in the three-phase coil 24. Owing to a construction of the above-described feature (b), the coil segments 80 received in the third and fourth layers in the same one of the slots 22s, are of different phases. Owing to constructions of the above-described features (c)-(e), in the connection of the coil segments 80 as seen from side of the input terminal 70 of the phase coil, the connection of the coil segments 80 received in the third layer is made after the outer-layer connection portion Ro in the inward winding portion is caused to extend in the circumferential direction, and the connection of the coil segments 80 received in the fourth layer is made after the outer-layer connection portion Ro in the inward winding portion is caused to extend in the circumferential direction. Thus, an impedance between the adjacent coil segments 80 received in the third and fourth layers is reduced in proportion to a number of the coil segments 80 connected in the outer-layer connection portion Ro of the inward winding portion as seen from side of the input terminal 70 of each phase. Therefore, the constructions of the above-described features (c)-(e) result in a smaller maximum impedance between the adjacent coil segments 80 with different phases in the same slot 22s, as compared with a case without the constructions of the above-described features (c)-(e). The smaller maximum impedance results in a smaller maximum value of the voltage difference between the adjacent coil segments 80 with the different phases in the same slot 22s. Therefore, an insulating film on each of the coil segments 80 can be made thinner whereby a fill factor can be improved. Thus, for example, it is possible to reduce a size of the rotary electric machine 10 while maintaining the same performance, or to improve a performance of the rotary electric machine 10 while maintaining the same size.

In the present embodiment, each of the inward winding portion 42a and the outward winding portion 42b includes the outer-layer connection portion Ro, the inner-layer connection portion Ri, the intermediate-layer connection portion Rm, the outer-layer-side transfer portion Swo which connects between the end portion of the outer-layer connection portion Ro and the end portion of the intermediate-layer connection portion Rm, and the inner-layer-side transfer portion Swi which connects between the end portion of the inner-layer connection portion Ri and the end portion of the intermediate-layer connection portion Rm. The second coil portion 44 of the U phase coil 40, the first coil portion 52 and the second coil portion 54 of the V phase coil 50 and the first coil portion 62 and the second coil portion 64 of the W phase coil 60 also have a similar connection structure. Thus, by appropriately increasing or decreasing the number of pitches of the outer-layer connection portion Ro, the intermediate-layer connection portion Rm and the inner-layer connection portion Ri, it is possible to easily construct the three-phase coil 24 of distributed winding corresponding to the number of slots 22s, which is six times the number of the poles of the rotor 30. For example, in the present embodiment, the three-phase coil 24 is constructed such that the number of slots 22s is 24. However, by reducing the number of pitches of the outer-layer connection portion Ro, intermediate-layer connection portion Rm and inner-layer connection portion Ri by 12, the three-phase coil 24 can be constructed such that the number of the poles of the rotor 30 is 2 and the number of the slots 22s is 12. By increasing the number of pitches of the outer-layer connection portion Ro, intermediate-layer connection portion Rm and inner-layer connection portion Ri by 12, the three-phase coil 24 can be constructed such that the number of the poles of the rotor 30 is 6 and the number of the slots 22s is 36.

In the present embodiment, the outer-layer connection portion Ro, intermediate-layer connection portion Rm and inner-layer connection portion Ri in the inward winding portion 42a extend in the same direction as the circumferential direction. Where the outer-layer connection portion Ro, the intermediate-layer connection portion Rm and the inner-layer connection portion Ri in the inward winding portion 42a all have the same bending direction, circumferential bending directions of the coil segments 80 can be unified in the outer-layer connection portion Ro, intermediate-layer connection portion Rm and inner-layer connection portion Ri, as compared with a case in which all of them do not have the same bending direction. The same applies to V phase coil 50 and W phase coil 60. The "bending direction" here refers to a direction in which the distal end portions 82t of the pair of arm portions 82 of the coil segments 80 are bent in the circumferential and radial directions. Specifically, this refers to a direction indicated by solid lines in FIG. 5A. This allows processes of bending and welding the coil segments 80 to be repeated in a repeated pattern, thereby improving a workability in a process of winding the three-phase coil 24.

In the present embodiment, in the first coil portion 42, the coil segments 80 in the inward winding portion 42a extend in one of opposite directions as the circumferential direction, while the coil segments 80 in the outward winding portion 42b extend in the other of the opposite directions as the circumferential direction. This allows the inward winding portion 42a and the outward winding portion 42b in the first coil portion 42 of the U phase coil 40 to have a simple double-helix configuration, and allows the processes of bending and welding the coil segments 80 to be repeated in a repeated pattern, thereby improving the workability in the process of winding the three-phase coil 24, for example. The same applies to the second coil portion 44 of the U phase coil 40, the first coil portion 52 and second coil portion 54 of the V phase coil 50, and the first coil portion 62 and second coil portion 64 of the W phase coil 60.

In the present embodiment, in the first coil portion 42, (a) in the outer-layer connection portion Ro and the inner-layer connection portion Ri, the number of pitches (that represents how many times as large as the above-described predetermined pitch at which the slots 22s are arranged in the circumferential direction) on side of the bridge portion 84 of each of the coil segments 80 and the number of pitches on side of the welded portion 88 of each of the coil segments 80 are both 6, (b) in the intermediate-layer connection portion Rm, the number of pitches on side of the bridge portion 84 of each of the coil segments 80 is 7 while the number of pitches on side of the welded portion 88 of each of the coil segments 80 are 5, and (c) in the outer-layer-side transfer portion Swo and the inner-layer-side transfer portion Swi, the number of pitches on side of the bridge portion 84 of each of the coil segments 80 is 6. The same applies to the second coil portion 44 of the U phase coil 40, the first coil portion 52 and second coil portion 54 of the V phase coil 50, and the first coil portion 62 and second coil portion 64 of the W phase coil 60. With use of the coil segments 80 having constructions of the above-described features (a)-(c), the coil segments 80 of the same phase of the three-phase coil 24 are received in the first, second and third layers in the first pair of the slots 22s which are adjacent to each other in the circumferential direction, and are received in the fourth, fifth and sixth layers in the second pair of the slots 22s which are adjacent to each other in the circumferential direction and which are shifted in the circumferential direction from the first pair of the slots 22s by the predetermined pitch. In addition, the types of coil segments 80 used for constituting the three-phase coil 24 and having the number of pitches on side of the bridge portion 84 and the number of pitches on side of the welded portion 88 being different from each other are limited.

In the present embodiment, (a) the three-phase coil 24 is Y-connected, (b) the phase coil includes the first coil portion 42 and the second coil portion 44 connected in parallel between the U phase terminal 72 and the neutral point N, (c) the phase coil includes the first coil portion 52 and the second coil portion 54 connected in parallel between the V phase terminal 74 and the neutral point N, (d) the phase coil includes the first coil portion 62 and the second coil portion 64 connected in parallel between the W phase terminal 76 and the neutral point N, and (e) the connection structure of the coil segments 80 in the U phase coil 40 is the same for the first and second coil portions 42, 44, the connection structure of the coil segments 80 in the V phase coil 50 is the same for the first and second coil portions 52, 54, and the connection structure of the coil segments 80 in the W phase coil 60 is the same for the first and second coil portions 62, 64. In this way, where the connection structure of the coil segments 80 in each phase coil is the same, the connection structure is simpler and less complicated than where the connection structure of the coil segments 80 in each phase coil is not the same. This allows the processes of bending and welding the coil segments 80 to be repeated in a repeated pattern, thereby improving the workability in the process of winding the three-phase coil 24, for example.

In the present embodiment, in the first coil portions 42, 52, 62 and the second coil portions 44, 54, 64 of the phase coil in the three-phase coil 24, the coil segments 80, which are the same in terms of the connection order as seen from side of the input terminal 70, are received in the pair of the slots 22s that are adjacent to each other in the circumferential direction. For example, in the first coil portion 42 and the second coil portion 44, the coil segments 80 having the same connection order as seen from side of the U phase terminal 72 are received in the pair of slots 22s that are adjacent to each other in the circumferential direction, so that the first coil portion 42 and the second coil portion 44 have the same connection structure. In this way, where the first coil portion 42 and the second coil portion 44 have the same connection structure, the connection structure is simplified and not complicated as compared to where they do not have the same connection structure. This allows the processes of bending and welding the coil segments 80 to be repeated in a repeated pattern, thereby further improving the workability in the process of winding the three-phase coil 24, for example.

### SECOND EMBODIMENT

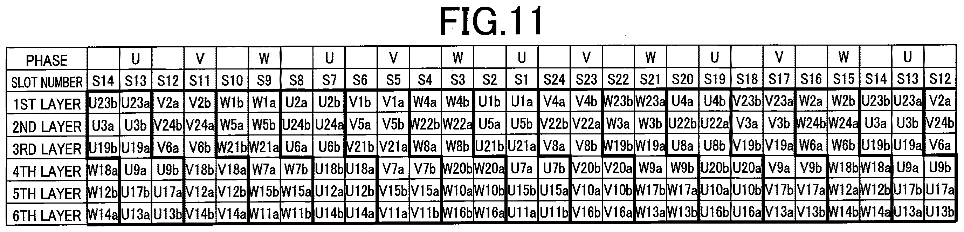

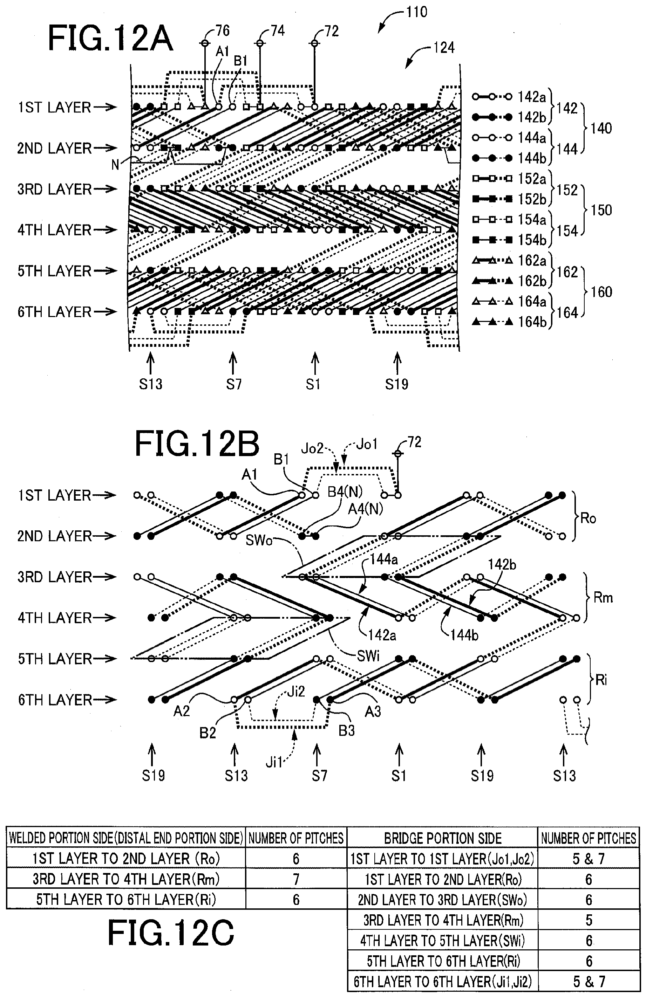

FIG. 11 is a layout diagram of coil segments 80 constituting a three-phase coil 124 wound around a stator core 22 of a rotary electric machine 110 according to a second embodiment of the present invention. FIGS. 12A-12C are views explaining the connection structure of the coil segments 80 constituting the three-phase coil 124 shown in FIG. 11, wherein FIG. 12A is a view explaining an overall structure of the connection structure of the three-phase coil 124, FIG. 12B is a view explaining details of the connection structure of a U phase coil 140, and FIG. 12C is a view explaining types of coil segments 80 used to constitute the three-phase coil 124. In FIG. 12A and 12b, broken lines represent the bridge portion 84 side of the coil segments 80, and solid lines represent the welded portion 88 side of the coil segments 80.

The rotary electric machine 110 has substantially the same construction as the rotary electric machine 10 of the above-described first embodiment, except that the U phase coil 40, V phase coil 50 and W phase coil 60 are replaced by a U phase coil 140, a V phase coil 150 and a W phase coil 160, respectively. Each of the U phase coil 140, V phase coil 150 and W phase coil 160 corresponds to "phase coil" in the present embodiment. The connection structure in the U phase coil 140, V phase coil 150 and W phase coil 160 is partially different from that in the U phase coil 40, V phase coil 50 and W phase coil 60. Therefore, in this second embodiment, the description will be focused on parts that are different from those of the first embodiment, and parts that are substantially common in function to those of the first embodiment will be given the same reference numerals and explanations will be omitted as appropriate. In this second embodiment, a first coil portion 142, a second coil portion 144, a first coil portion 152, a second coil portion 154, a first coil portion 162 and a second coil portion 164 have constructions corresponding to the first coil portion 42, second coil portion 44, first coil portion 52, second coil portion 54, first coil portion 62 and second coil portion 64, respectively, in the above-described first embodiment. In this second embodiment, inward winding portions 142a, 144a, 152a, 154a, 162a, 164a, outward winding portion 142b, 144b, 152b, 154b, 162b, 164b and inner-peripheral-end connection portions Ji1, Ji2 connecting between their inner-peripheral-side end portions have constructions corresponding to the inward winding portion 42a, 44a, 52a, 54a, 62a, 64a, outward winding portion 42b, 44b, 52b, 54b, 62b, 64b and inner-peripheral-end connection portions Ji1, Ji2 connecting between their inner-peripheral-side end portions, respectively, in the above-described first embodiment.

As shown in FIG. 12A, the V phase coil 150 has the same connection structure as the U phase coil 140, but the connection structure is shifted leftward (as seen in FIG. 12A) by four times as large as the above-described pitch of the slots 22s in the circumferential direction. The W phase coil 160 has the same connection structure as the U phase coil 140, but the connection structure is shifted leftward by eight times as large as the pitch of the slots 22s in the circumferential direction. Further, in the first coil portion 142 and second coil portion 144 of the U phase coil 140, the coil segments 80 connected in the same order from the U phase terminal 72 are received the slots 22s adjacent in the circumferential direction. Therefore, the following description will focus on the connection structure of the coil segments 80 of the first coil portion 142, and explanation of the other connection structures will be omitted where appropriate.

As shown in FIGS. 12A and 12B, the first coil portion 142 of the U phase coil 140 has the inward winding portion 142a, the outward winding portion 142b and the inner-peripheral-end connection portions Ji1, Ji2 connecting between their inner-peripheral-side end portions.

The inward winding portion 142a has a connection structure substantially the same as that of the inward winding portion 42a, except that the circumferential extending of the coil segments 80 in the intermediate-layer connection portion Rm is opposite in direction. Specifically, as shown in FIGS. 12B, in the inward winding portion 142a, the outer-layer connection portion Ro extends leftward, the intermediate-layer connection portion Rm extends rightward and the inner-layer connection portion Ri extends leftward. In the outward winding portion 142b, the outer-layer connection portion Ro extends rightward, the intermediate-layer connection portion Rm extends leftward and the inner-layer connection portion Ri extends rightward. Thus, in the inward winding portion 142a and the outward winding portion 142b, the circumferential extending of the coil segments 80 in the intermediate-layer connection portion Rm is opposite in direction to those in the outer-layer connection portion Ro and the inner-layer connection portion Ri. It is noted that each of the inward winding portion 42a and the outward winding portion 42b has the double-helix connection structure in the outer-layer connection portion Ro, the intermediate-layer connection portion Rm and the inner-layer connection portion Ri.

In the outer-layer connection portion Ro and the inner-layer connection portion Ri, a number of pitches on side of the bridge portion 84 and a number of pitches on side of the welded portion 88 of the coil segments 80 are both 6, wherein the number of pitches on side of the bridge portion 84 is represented by each broken line shown in FIG. 12A, and wherein the number of pitches on side of the welded portion 88 is represented by each solid line shown in FIG. 12A. In the intermediate-layer connection portion Rm, the number of pitches on side of the bridge portion 84 of the coil segments 80 is 5, while the number of pitches on side of the welded portion 88 of the coil segments 80 is 7. In the outer-layer-side transfer portion SWo and the inner-layer-side transfer portion SWi, the number of pitches on side of the bridge portion 84 of the coil segments 80 is 6. In the coil segments 80 in each of which the pair of arm portions 82 are both received in the first layer, the numbers of pitches on side of the bridge portion 84 are 5 and 7. Similarly, in the coil segments 80 in each of which the pair of arm portions 82 are both received in the sixth layer, the numbers of pitches on side of the bridge portion 84 are 5 and 7.

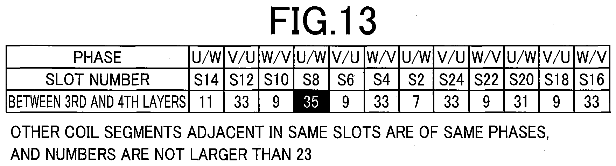

FIG. 13 is a view explaining a maximum value of a voltage difference between adjacent coil segments 80 in the same slots 22s in the three-phase coil 124 shown in FIGS. 12A-12C, and showing the voltage difference between the adjacent coil segments 80. FIG. 13 shows numbers each of which is related to the voltage difference between adjacent coil segments 80 in the same slots 22s, wherein each number shown in FIG. 13 is obtained by diving the voltage difference by (1/46 × Vo) [V].

As shown in FIG. 13, the voltage difference between the coil segments 80 received in the third and fourth layers of slot number S8 is maximum value (= 35/46 × Vo). In FIG. 13, the area in which the voltage difference between adjacent coil segments 80 is at its maximum is shown in white-on-black text. In this second embodiment, the maximum value of the voltage difference between adjacent coil segments 80 in the same slots 22s is reduced by approximately 22.2 [%] {= 1-(35/45)} as compared to the above-described comparative example 1.

The present second embodiment provides substantially the same effects as the above-described first embodiment, owing to the construction that is substantially the same as that of the first embodiment.

### THIRD EMBODIMENT

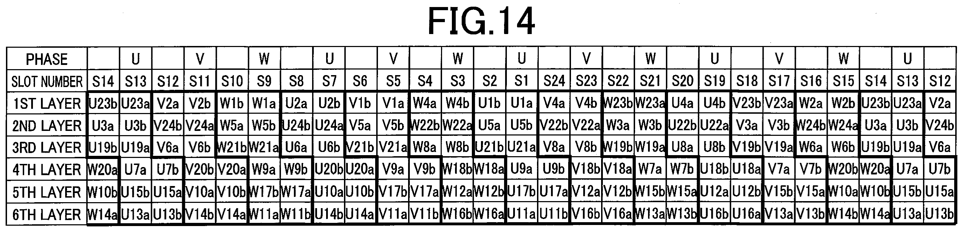

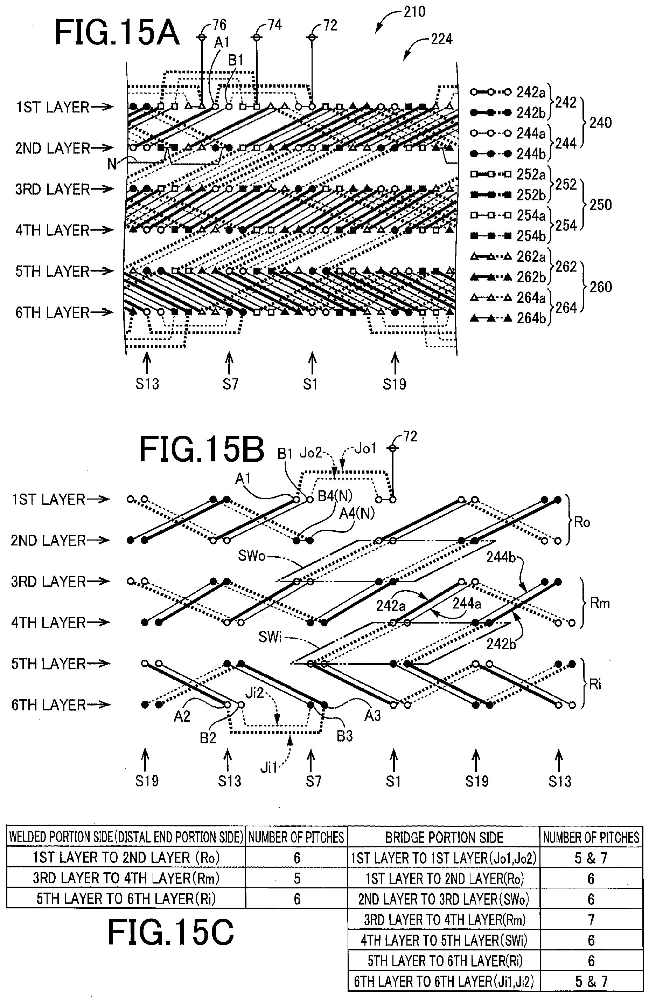

FIG. 14 is a layout diagram of coil segments 80 constituting a three-phase coil 224 wound around a stator core 22 of a rotary electric machine 210 according to a third embodiment of the present invention. FIGS. 15A-15C are views explaining the connection structure of the coil segments 80 constituting the three-phase coil 224 shown in FIG. 14, wherein FIG. 15A is a view explaining an overall structure of the connection structure of the three-phase coil 224, FIG. 15B is a view explaining details of the connection structure of a U phase coil 240, and FIG. 15C is a view explaining types of coil segments 80 used to constitute the three-phase coil 224. In FIG. 15A and 15b, broken lines represent the bridge portion 84 side of the coil segments 80, and solid lines represent the welded portion 88 side of the coil segments 80.

The rotary electric machine 210 has substantially the same construction as the rotary electric machine 10 of the above-described first embodiment, except that the U phase coil 40, V phase coil 50 and W phase coil 60 are replaced by a U phase coil 240, a V phase coil 250 and a W phase coil 260, respectively. Each of the U phase coil 240, V phase coil 250 and W phase coil 260 corresponds to "phase coil" in the present embodiment. The connection structure in the U phase coil 240, V phase coil 250 and W phase coil 260 is partially different from that in the U phase coil 40, V phase coil 50 and W phase coil 60. Therefore, in this third embodiment, the description will be focused on parts that are different from those of the first embodiment, and parts that are substantially common in function to those of the first embodiment will be given the same reference numerals and explanations will be omitted as appropriate. In this third embodiment, a first coil portion 242, a second coil portion 244, a first coil portion 252, a second coil portion 254, a first coil portion 262 and a second coil portion 264 have constructions corresponding to the first coil portion 42, second coil portion 44, first coil portion 52, second coil portion 54, first coil portion 62 and second coil portion 64, respectively, in the above-described first embodiment. In this third embodiment, inward winding portions 242a, 244a, 252a, 254a, 262a, 264a, outward winding portion 242b, 244b, 252b, 254b, 262b, 264b and inner-peripheral-end connection portions Ji1, Ji2 connecting between their inner-peripheral-side end portions have constructions corresponding to the inward winding portion 42a, 44a, 52a, 54a, 62a, 64a, outward winding portion 42b, 44b, 52b, 54b, 62b, 64b and inner-peripheral-end connection portions Ji1, Ji2 connecting between their inner-peripheral-side end portions, respectively, in the above-described first embodiment.

As shown in FIG. 15A, the V phase coil 250 has the same connection structure as the U phase coil 240, but the connection structure is shifted leftward (as seen in FIG. 15A) by four times as large as the above-described pitch of the slots 22s in the circumferential direction. The W phase coil 260 has the same connection structure as the U phase coil 240, but the connection structure is shifted leftward by eight times as large as the pitch of the slots 22s in the circumferential direction. Further, in the first coil portion 242 and second coil portion 244 of the U phase coil 240, the coil segments 80 connected in the same order from the U phase terminal 72 are received the slots 22s adjacent in the circumferential direction. Therefore, the following description will focus on the connection structure of the coil segments 80 of the first coil portion 242, and explanation of the other connection structures will be omitted where appropriate.

As shown in FIGS. 15A and 15B, the first coil portion 242 of the U phase coil 240 has the inward winding portion 242a, the outward winding portion 242b and the inner-peripheral-end connection portions Ji1, Ji2 connecting between their inner-peripheral-side end portions.

The inward winding portion 242a has a connection structure substantially the same as that of the inward winding portion 42a, except that the circumferential extending of the coil segments 80 in the intermediate-layer connection portion Rm is opposite in direction. Specifically, as shown in FIGS. 15B, in the inward winding portion 242a, the outer-layer connection portion Ro extends leftward, the intermediate-layer connection portion Rm extends leftward and the inner-layer connection portion Ri extends rightward. In the outward winding portion 242b, the outer-layer connection portion Ro extends rightward, the intermediate-layer connection portion Rm extends rightward and the inner-layer connection portion Ri extends leftward. Thus, in the inward winding portion 242a and the outward winding portion 242b, the circumferential extending of the coil segments 80 in the inner-layer connection portion Ri is opposite in direction to those in the outer-layer connection portion Ro and the intermediate-layer connection portion Rm. It is noted that each of the inward winding portion 242a and the outward winding portion 242b has the double-helix connection structure in the outer-layer connection portion Ro, the intermediate-layer connection portion Rm and the inner-layer connection portion Ri.

As shown in FIG. 15C, the type of coil segments 80 used to constitute the three-phase coil 224 in this third embodiment is the same as in the above-described first embodiment.

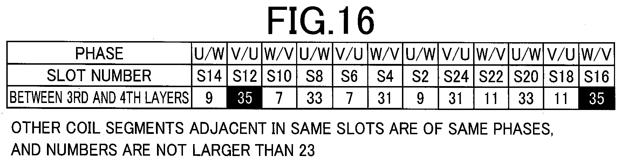

FIG. 16 is a view explaining a maximum value of a voltage difference between adjacent coil segments 80 in the same slots 22s in the three-phase coil 224 shown in FIGS. 15A-15C, and showing the voltage difference between the adjacent coil segments 80. FIG. 16 shows numbers each of which is related to the voltage difference between adjacent coil segments 80 in the same slots 22s, wherein each number shown in FIG. 16 is obtained by diving the voltage difference by (1/46 × Vo) [V].

As shown in FIG. 16, the voltage difference between the coil segments 80 received in the third and fourth layers of slot number S12 and the voltage difference between the coil segments 80 received in the third and fourth layers of slot number S16 are maximum values (= 35/46 × Vo). In FIG. 16, the areas in which the voltage difference between adjacent coil segments 80 is at its maximum is shown in white-on-black text. In this third embodiment, the maximum value of the voltage difference between adjacent coil segments 80 in the same slots 22s is reduced by approximately 22.2 [%] {= 1-(35/45)} as compared to the above-described comparative example 1.

The present third embodiment provides substantially the same effects as the above-described first embodiment, owing to the construction that is substantially the same as that of the first embodiment.

### FOURTH EMBODIMENT

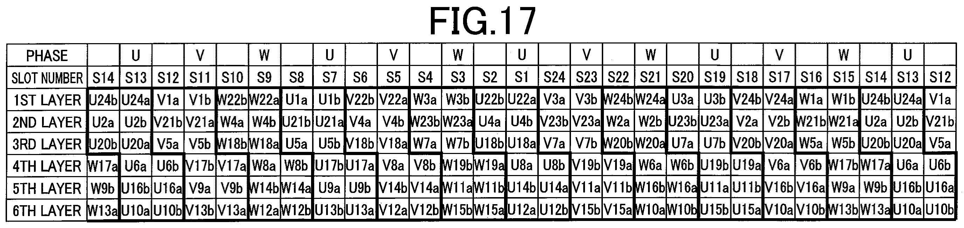

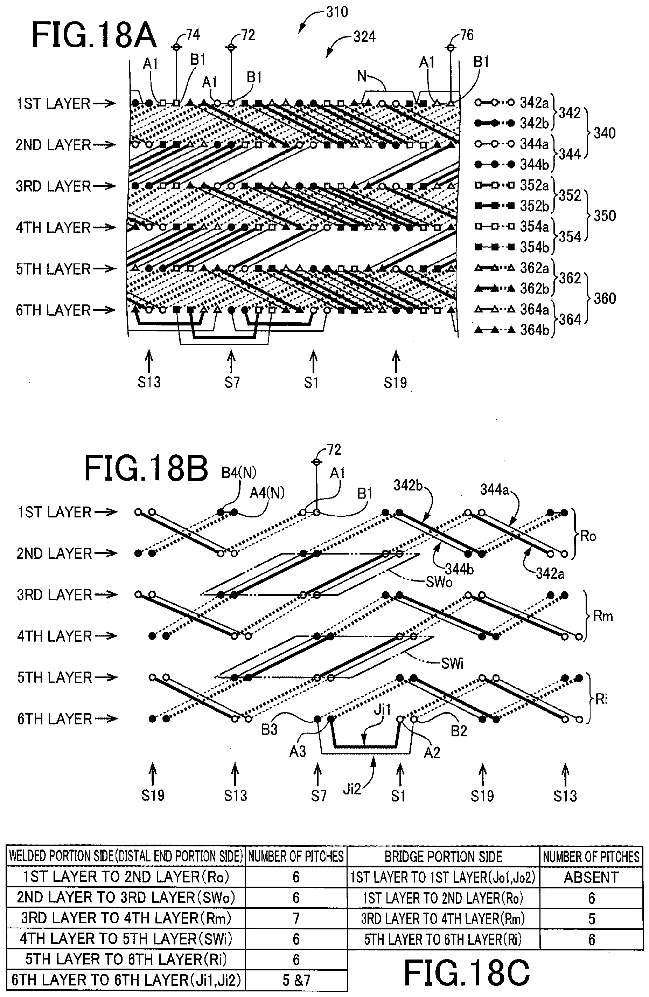

FIG. 17 is a layout diagram of coil segments 80 constituting a three-phase coil 324 wound around a stator core 22 of a rotary electric machine 310 according to a fourth embodiment of the present invention. FIGS. 18A-18C are views explaining the connection structure of the coil segments 80 constituting the three-phase coil 324 shown in FIG. 17, wherein FIG. 18A is a view explaining an overall structure of the connection structure of the three-phase coil 324, FIG. 18B is a view explaining details of the connection structure of a U phase coil 340, and FIG. 18C is a view explaining types of coil segments 80 used to constitute the three-phase coil 324. In FIG. 18A and 18b, broken lines represent the bridge portion 84 side of the coil segments 80, and solid lines represent the welded portion 88 side of the coil segments 80.

The rotary electric machine 310 has substantially the same construction as the rotary electric machine 10 of the above-described first embodiment, except that the U phase coil 40, V phase coil 50 and W phase coil 60 are replaced by a U phase coil 340, a V phase coil 350 and a W phase coil 360, respectively. Each of the U phase coil 340, V phase coil 350 and W phase coil 360 corresponds to "phase coil" in the present embodiment. The connection structure in the U phase coil 340, V phase coil 350 and W phase coil 360 is partially different from that in the U phase coil 40, V phase coil 50 and W phase coil 60. Therefore, in this fourth embodiment, the description will be focused on parts that are different from those of the first embodiment, and parts that are substantially common in function to those of the first embodiment will be given the same reference numerals and explanations will be omitted as appropriate. In this fourth embodiment, a first coil portion 342, a second coil portion 344, a first coil portion 352, a second coil portion 354, a first coil portion 362 and a second coil portion 364 have constructions corresponding to the first coil portion 42, second coil portion 44, first coil portion 52, second coil portion 54, first coil portion 62 and second coil portion 64, respectively, in the above-described first embodiment. In this fourth embodiment, inward winding portions 342a, 344a, 352a, 354a, 362a, 364a, outward winding portion 342b, 344b, 352b, 354b, 362b, 364b and inner-peripheral-end connection portions Ji1, Ji2 connecting between their inner-peripheral-side end portions have constructions corresponding to the inward winding portion 42a, 44a, 52a, 54a, 62a, 64a, outward winding portion 42b, 44b, 52b, 54b, 62b, 64b and inner-peripheral-end connection portions Ji1, Ji2 connecting between their inner-peripheral-side end portions, respectively, in the above-described first embodiment.

As shown in FIG. 18A, the V phase coil 350 has the same connection structure as the U phase coil 340, but the connection structure is shifted leftward (as seen in FIG. 18A) by four times as large as the above-described pitch of the slots 22s in the circumferential direction. The W phase coil 360 has the same connection structure as the U phase coil 340, but the connection structure is shifted leftward by eight times as large as the pitch of the slots 22s in the circumferential direction. Further, in the first coil portion 342 and second coil portion 344 of the U phase coil 340, the coil segments 80 connected in the same order from the U phase terminal 72 are received the slots 22s adjacent in the circumferential direction. Therefore, the following description will focus on the connection structure of the coil segments 80 of the first coil portion 342, and explanation of the other connection structures will be omitted where appropriate.

As shown in FIGS. 18A and 18B, the first coil portion 342 of the U phase coil 340 has the inward winding portion 342a, the outward winding portion 342b and the inner-peripheral-end connection portions Ji1, Ji2 connecting between their inner-peripheral-side end portions.

The inward winding portion 342a has a connection structure substantially the same as that of the inward winding portion 42a, but differs in that the U phase coil 340 does not include the outer-peripheral-end connection portions Jo1, Jo2 as in the first embodiment described above. Specifically, as shown in FIG. 18B, the outer-layer connection portion Ro starts to extend circumferentially from the first layer to which the U-phase terminal 72 is connected, to the second layer immediately, so that there is no coil segment 80 connecting the first layer together.

In the outer-layer connection portion Ro and the inner-layer connection portion Ri, a number of pitches on side of the bridge portion 84 and a number of pitches on side of the welded portion 88 of the coil segments 80 are both 6, wherein the number of pitches on side of the bridge portion 84 is represented by each broken line shown in FIG. 18A, and wherein the number of pitches on side of the welded portion 88 is represented by each solid line shown in FIG. 18A. In the intermediate-layer connection portion Rm, the number of pitches on side of the bridge portion 84 of the coil segments 80 is 5, while the number of pitches on side of the welded portion 88 of the coil segments 80 is 7. In the outer-layer-side transfer portion SWo and the inner-layer-side transfer portion SWi, the number of pitches on side of the welded portion 88 of the coil segments 80 is 6. In this fourth embodiment, there is no coil segment 80 in which both of the pair of arm portions 82 are received in the first layer, and no coil segment 80 in which both of the pair of arm portions 82 are received in the sixth layer.

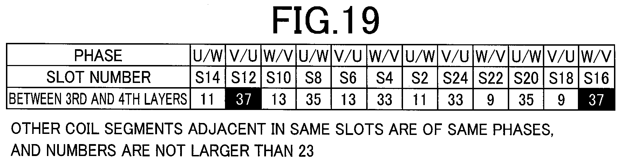

FIG. 19 is a view explaining a maximum value of a voltage difference between adjacent coil segments 80 in the same slots 22s in the three-phase coil 324 shown in FIGS. 18A-18C, and showing the voltage difference between the adjacent coil segments 80. FIG. 19 shows numbers each of which is related to the voltage difference between adjacent coil segments 80 in the same slots 22s, wherein each number shown in FIG. 19 is obtained by diving the voltage difference by (1/46 × Vo) [V].

As shown in FIG. 19, the voltage difference between the coil segments 80 received in the third and fourth layers of slot number S12 and the voltage difference between the coil segments 80 received in the third and fourth layers of slot number S16 are maximum values (= 37/46 × Vo). In FIG. 19, the areas in which the voltage difference between adjacent coil segments 80 is at its maximum are shown in white-on-black text. In this fourth embodiment, the maximum value of the voltage difference between adjacent coil segments 80 in the same slots 22s is reduced by approximately 17.7 [%] {= 1-(37/45)} as compared to the above-described comparative example 1.

The present fourth embodiment provides substantially the same effects as the above-described first embodiment, owing to the construction that is substantially the same as that of the first embodiment.

### FIFTH EMBODIMENT

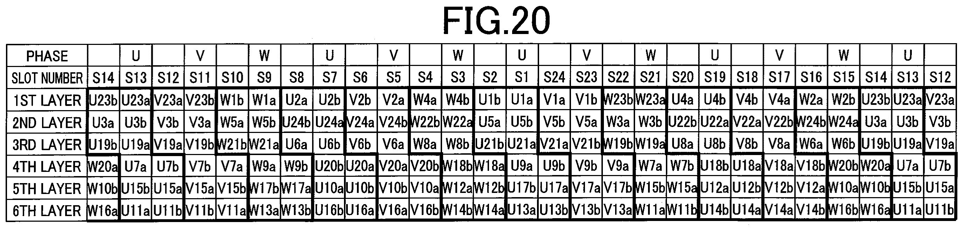

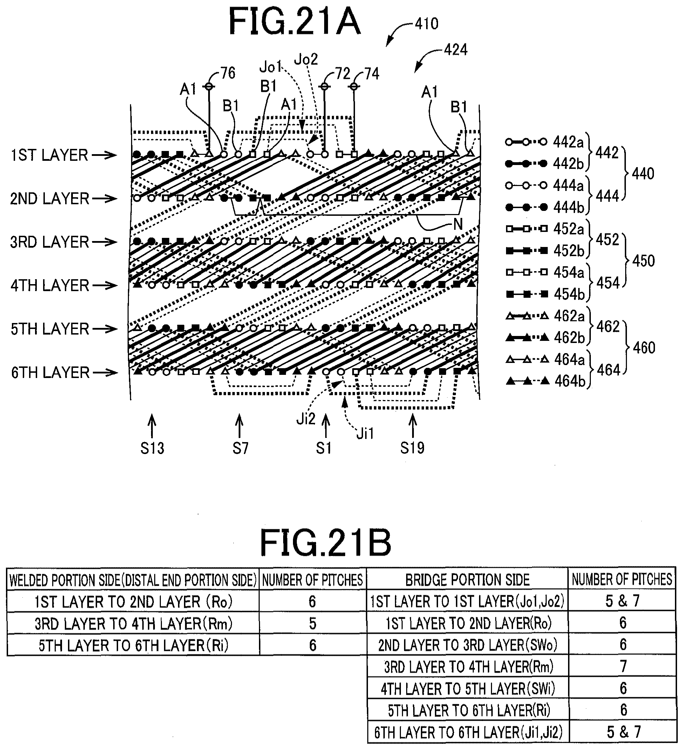

FIG. 20 is a layout diagram of coil segments 80 constituting a three-phase coil 424 wound around a stator core 22 of a rotary electric machine 410 according to a fifth embodiment of the present invention. FIGS. 21A and 21B are views explaining the connection structure of the coil segments 80 constituting the three-phase coil 424 shown in FIG. 20, wherein FIG. 21A is a view explaining an overall structure of the connection structure of the three-phase coil 424, and FIG. 21B is a view explaining types of coil segments 80 used to constitute the three-phase coil 424. In FIG. 21A, broken lines represent the bridge portion 84 side of the coil segments 80, and solid lines represent the welded portion 88 side of the coil segments 80.

The rotary electric machine 410 has substantially the same construction as the rotary electric machine 10 of the above-described first embodiment, except that the U phase coil 40, V phase coil 50 and W phase coil 60 are replaced by a U phase coil 440, a V phase coil 450 and a W phase coil 460, respectively. Each of the U phase coil 440, V phase coil 450 and W phase coil 460 corresponds to "phase coil" in the present embodiment. The U phase coil 440 and W phase coil 460 have the same connection structure as the U phase coil 40 and W phase coil 60, respectively. The V phase coil 450 has substantially the same connection structure as the V phase coil 50, but the inner winding start position of the outer-layer connection portion Ro of the V phase coil 450 is different from that of the above-described first embodiment. Therefore, in this fifth embodiment, the description will be focused on parts that are different from those of the first embodiment, and parts that are substantially common in function to those of the first embodiment will be given the same reference numerals and explanations will be omitted as appropriate. In this fifth embodiment, a first coil portion 442, a second coil portion 444, a first coil portion 452, a second coil portion 454, a first coil portion 462 and a second coil portion 464 have constructions corresponding to the first coil portion 42, second coil portion 44, first coil portion 52, second coil portion 54, first coil portion 62 and second coil portion 64, respectively, in the above-described first embodiment. In this fifth embodiment, inward winding portions 442a, 444a, 452a, 454a, 462a, 464a, outward winding portion 442b, 444b, 452b, 454b, 462b, 464b and inner-peripheral-end connection portions Ji1, Ji2 connecting between their inner-peripheral-side end portions have constructions corresponding to the inward winding portion 42a, 44a, 52a, 54a, 62a, 64a, outward winding portion 42b, 44b, 52b, 54b, 62b, 64b and inner-peripheral-end connection portions Ji1, Ji2 connecting between their inner-peripheral-side end portions, respectively, in the above-described first embodiment.

As shown in FIGS. 20 and 21, the V phase coil 450 is different from the U phase coil 440 in that the connection structure of the coil segments 80 is shifted rightward (as seen in FIGS. 20 and 21) by twice as large as the pitch of the slots 22s in the circumferential direction, and in that the received position of the coil segments 80 of the first coil portion 442 and the received position of the coil segments 80 of the second coil portion 444 are interchanged.

In this fifth embodiment, the inward-winding start position A1 of each of the first coil portion 442 and the second coil portion 444 of the U phase coil 440, the inward-winding start position A1 of each of the first coil portion 452 and the second coil portion 454 of the V phase coil 450, and the inward-winding start position A1 of each of the first coil portion 462 and the second coil portion 464 of the W phase coil 460 are all placed in predetermined positions.

The "predetermined positions" are positions determined in advance by design such that the maximum value of the voltage difference between the coil segments 80 of different phases that are received in the third and fourth layer of the same slots 22s is minimized. Each of the predetermined positions corresponds to "predetermined position" in the present invention.

In the above-described first embodiment, FIG. 7C shows the connection order of the coil segments 80 as seen from side of the input terminal 70 of each phase and the voltage difference between adjacent coil segments 80 where the coil segments 80 of different phases are adjacent in the same slots 22s. In FIG. 7C, the received positions (V6a, V20a, V21b, V9b, V8a, V18a, V19b, V7b) of the V-phase coil segments 80 can be shifted by six times as large as the pitch of the slots 22s relative to the received positions (U19b, U7b, U6a, U20a, U21b, U9b, U8a, U18a) of the U-phase coil segments 80. That is, in the W phase coil 460, the inward-winding start position A1 of the first coil portion 462 and the second coil portion 464 can be shifted by six times as large as the pitch of the slots 22s. In this way, among combinations in which the inward-winding start position A1 of the U phase coil 440, V phase coil 450 and W phase coil 460 are shifted by six times as large as the pitch of the slots 22s, it is possible to determine in advance in the design one of the combination that results in the smallest maximum voltage difference between the coil segments 80 of different phases received in the third and fourth layers of the same slots 22s. The "predetermined positions" are positions determined in advance in the design.

As shown in FIG. 21B, the types of coil segments 80 used to constitute the three-phase coil 424 are substantially the same as those in the above-described first embodiment.

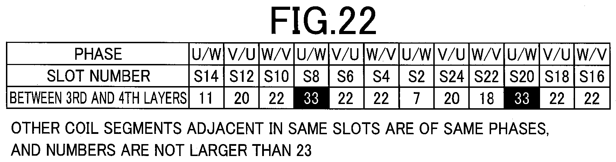

FIG. 22 is a view explaining a maximum value of a voltage difference between adjacent coil segments 80 in the same slots 22s in the three-phase coil 424 shown in FIGS. 21A and 21B, and showing the voltage difference between the adjacent coil segments 80. FIG. 22 shows numbers each of which is related to the voltage difference between adjacent coil segments 80 in the same slots 22s, wherein each number shown in FIG. 22 is obtained by diving the voltage difference by (1/46 × Vo) [V].

As shown in FIG. 22, the voltage difference between the coil segments 80 received in the third and fourth layers of slot number S8 and voltage difference between the coil segments 80 received in the third and fourth layers of slot number S20 are maximum values (= 33/46 × Vo). In FIG. 22, the areas in which the voltage difference between adjacent coil segments 80 is at its maximum are shown in white-on-black text. In this fifth embodiment, the maximum value of the voltage difference between adjacent coil segments 80 in the same slots 22s is reduced by approximately 26.7 [%] {= 1-(35/45)} as compared to the above-described comparative example 1, and is reduced also as compared to the above-described first embodiment.

The present fifth embodiment provides substantially the same effects as the above-described first embodiment, owing to the construction that is substantially the same as that of the first embodiment.

In the present fifth embodiment, the winding start position A1 of the inward winding portions 442a, 444a, 452a, 454a, 462a, 464a in the U phase coil 440, V phase coil 450 and W phase coil 460 are set in the predetermined positions that are predetermined such that the maximum value of the voltage difference between the coil segments 80 of the different phases that are received in the third and fourth layers in the same slots 22s is reduced. With the winding start position A1 of the inward winding portions 442a, 444a, 452a, 454a, 462a, 464a in the U phase coil 440, V phase coil 450 and W phase coil 460 being set in the predetermined positions, the maximum value of the voltage difference between the coil segments 80 of the different phases that are received in the third and fourth layers in the same slots 22s is further reduced. Therefore, the insulating film on each of the coil segments 80 can be made thinner more whereby the fill factor can be improved. Thus, for example, it is possible to reduce the size of the rotary electric machine 410 while maintaining the same performance, or to improve the performance of the rotary electric machine 410 while maintaining the same size.

### SIXTH EMBODIMENT

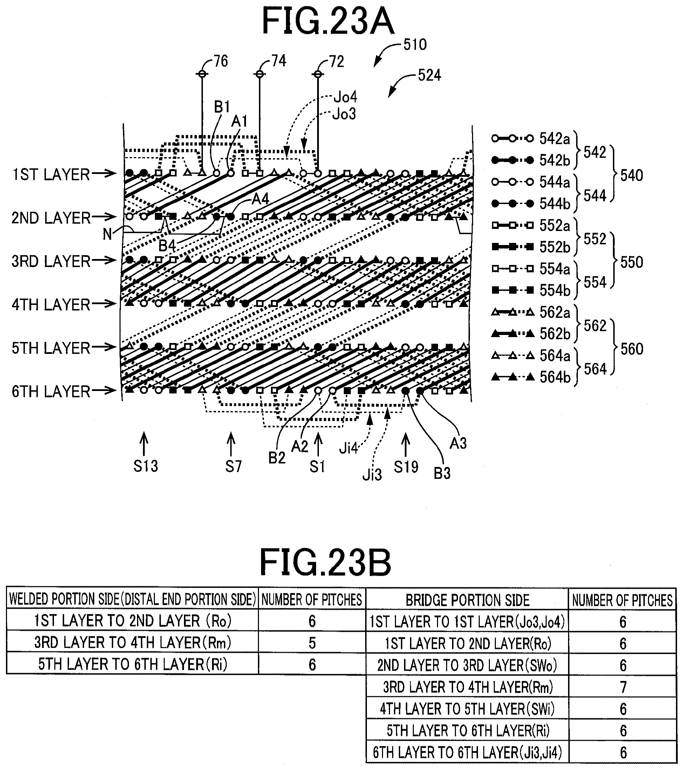

FIGS. 23A-23C are views explaining the connection structure of the coil segments 80 constituting a three-phase coil 524 wound around a stator core 22 of a rotary electric machine 510 according to a sixth embodiment of the present invention, wherein FIG. 23A is a view explaining an overall structure of the connection structure of the three-phase coil 524, and FIG. 23B is a view explaining types of coil segments 80 used to constitute the three-phase coil 524. In FIG. 23A, broken lines represent the bridge portion 84 side of the coil segments 80, and solid lines represent the welded portion 88 side of the coil segments 80.

The rotary electric machine 510 has substantially the same construction as the rotary electric machine 10 of the above-described first embodiment, except that the U phase coil 40, V phase coil 50 and W phase coil 60 are replaced by a U phase coil 540, a V phase coil 550 and a W phase coil 560, respectively. Each of the U phase coil 540, V phase coil 550 and W phase coil 560 corresponds to "phase coil" in the present embodiment. The connection structure in the U phase coil 540, V phase coil 550 and W phase coil 560 is partially different from that in the U phase coil 40, V phase coil 50 and W phase coil 60. Therefore, in this sixth embodiment, the description will be focused on parts that are different from those of the first embodiment, and parts that are substantially common in function to those of the first embodiment will be given the same reference numerals and explanations will be omitted as appropriate. In this sixth embodiment, a first coil portion 542, a second coil portion 544, a first coil portion 552, a second coil portion 554, a first coil portion 562 and a second coil portion 564 have constructions corresponding to the first coil portion 42, second coil portion 44, first coil portion 52, second coil portion 54, first coil portion 62 and second coil portion 64, respectively, in the above-described first embodiment. In this sixth embodiment, outer-peripheral-end connection portion Jo3, Jo4, inward winding portions 542a, 544a, 552a, 554a, 562a, 564a, outward winding portion 542b, 544b, 552b, 554b, 562b, 564b and inner-peripheral-end connection portions Ji3, Ji4 connecting between their inner-peripheral-side end portions have constructions corresponding to the outer-peripheral-end connection portion Jo1, Jo2, inward winding portion 42a, 44a, 52a, 54a, 62a, 64a, outward winding portion 42b, 44b, 52b, 54b, 62b, 64b and inner-peripheral-end connection portions Ji1, Ji2 connecting between their inner-peripheral-side end portions, respectively, in the above-described first embodiment.

As shown in FIG. 23A, each of the U phase coil 540, V phase coil 550 and W phase coil 560 has outer-peripheral-end connection portions Jo3, Jo4 and inner-peripheral-end connection portions Ji3, Ji4 that are different from the outer-peripheral-end connection portions Jo1, Jo2 and inner-peripheral-end connection portions Ji1, Ji2 in the first embodiment. The inward winding portions 542a, 552a, 562a have the same connection structure as the inward winding portions 44a, 54a, 64a in the first embodiment. The inward winding portions 544a, 554a, and 564a have the same connection structure as the inward winding portions 42a, 52a, 62a in the first embodiment. The outward winding portions 542b, 552b, 562b have the same connection structure as the outward winding portions 42a, 52a, 62a in the first embodiment. The outward winding portions 544b, 554b, 564b have the same connection structure as the outward winding portions 44b, 54b, 64b in the first embodiment. Specifically, the inward-winding start position A1 of the inward winding portion 542a is located in the first layer of slot number S7, which is shifted leftward (as seen in FIG. 23A) by six times as large as the pitch of the slots 22s from slot number S1 to which the U-phase terminal 72 is connected via the outer-peripheral-end connection portion Jo3. The inward-winding start position B1 of the inward winding portion 544a is located in the first layer of slot number S8, which is shifted leftward (as seen in FIG. 23A) by six times as large as the pitch of the slots 22s from slot number S2 to which the U-phase terminal 72 is connected via the outer-peripheral-end connection portion Jo4. The outward-winding start position A3 of the outward winding portion 542b is located in the sixth layer of slot number S18, which is shifted rightward (as seen in FIG. 23A) by six times as large as the pitch of the slots 22s from slot number S24 in which the inward-winding end position A2 is located, wherein the inward-winding end position A2 is connected to the outward-winding start position A3 via the inner-peripheral-end connection portion Ji3. The outward-winding start position B3 of the outward winding portion 544b is located in the sixth layer of slot number S19, which is shifted rightward (as seen in FIG. 23A) by six times as large as the pitch of the slots 22s from slot number S1 in which the inward-winding end position B2 is located, wherein the inward-winding end position B2 is connected to the outward-winding start position B3 via the inner-peripheral-end connection portion Ji4. The outer-peripheral-end connection portions Jo3, Jo4 of the V phase coil 550 and W phase coil 560 have the same configuration as those of the U phase coil 540. The inner-peripheral-end connection portions Ji3, Ji4 of the V phase coil 550 and W phase coil 560 have the same configuration as those of the U phase coil 540.

As shown in FIG. 23B, the types of coil segments 80 used to constitute the three-phase coil 424 are substantially the same as those in the above-described first embodiment, except that the number of pitches on side of the bridge portion 84 of the coil segments 80 whose pair of arm portions 82 are both received in the first layer and the number of pitches on side of the bridge portion 84 of the coil segments 80 whose pair of arm portions 82 are both received in the sixth layer are both 6.

The present sixth embodiment provides substantially the same effects as the above-described first embodiment, owing to the construction that is substantially the same as that of the first embodiment.

In the present sixth embodiment, the number of pitches on side of the bridge portion 84 of the coil segments 80 whose pair of arm portions 82 are both received in the first layer and the number of pitches on side of the bridge portion 84 of the coil segments 80 whose pair of arm portions 82 are both received in the sixth layer are both 6. Thus, the types of the coil segments 80, i.e., variation of the number of pitches of the coil segments 80, which are used to constitute the three-phase coil 524, can be reduced as compared to the above-described first through fourth embodiments.

### SEVENTH EMBODIMENT

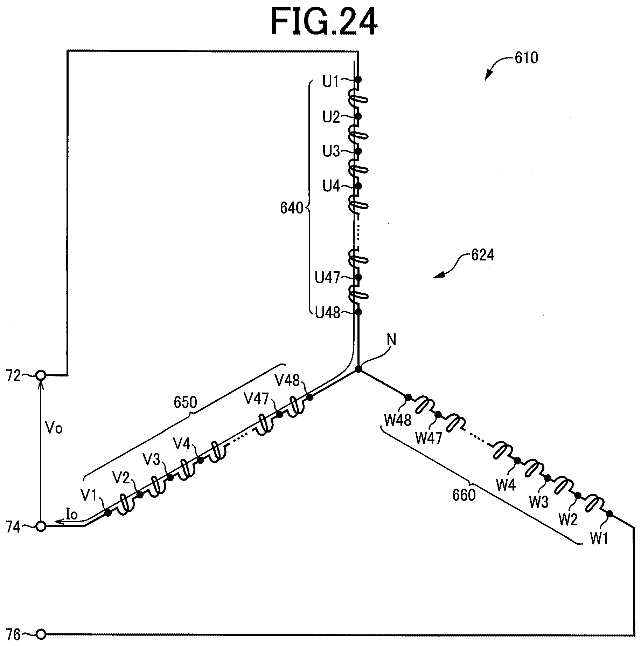

FIG. 24 is an electrical equivalent circuit diagram of a three-phase coil 624 wound around a stator core 22 of a rotary electric machine 610 according to this seventh embodiment of the present invention. The three-phase coil 624 is Y-connected. The three-phase coil 624 consists of U phase coil 640, V phase coil 650 and W phase coil 660. The U phase coil 640, V phase coil 650, and W phase coil 660 each correspond to "phase coil" in the present invention. The rotary electric machine 610 has substantially the same construction as the rotary electric machine 10 of the above-described first embodiment, except that the U phase coil 640, V phase coil 650 and W phase coil 660 are replaced by a U phase coil 640, a V phase coil 650 and a W phase coil 660, respectively. The connection structure in the U phase coil 640, V phase coil 650 and W phase coil 660 is partially different from that in the U phase coil 640, V phase coil 650 and W phase coil 660. Therefore, in this seventh embodiment, the description will be focused on parts that are different from those of the first embodiment, and parts that are substantially common in function to those of the first embodiment will be given the same reference numerals and explanations will be omitted as appropriate.

The U phase coil 640 has one end connected to the U phase terminal 72 and the other end connected to a neutral point N. The V phase coil 650 has one end connected to the V phase terminal 74 and the other end connected to the neutral point N. The W phase coil 660 has one end connected to the W phase terminal 76 and the other end connected to the neutral point N. The U phase coil 640 includes of a single coil portion disposed between the U phase terminal 72 and the neutral point N. The V phase coil 650 includes a single coil portion disposed between the V phase terminal 74 and the neutral point N. The W phase coil 660 includes a single coil portion disposed between the W phase terminal 76 and the neutral point N. Thus, each of the U phase coil 640, V phase coil 650 and W phase coil 660 is connected at one of its opposite ends to the input terminal 70 of the corresponding phase and at the other of its opposite ends to the neutral point N, with the single coil portion being disposed between the input terminal 70 and the neutral point N. Each of the U phase coil 640, V phase coil 650 and W phase coil 660 corresponds to "coil portion" in the present invention.

Here, the positions in which the coil segments 80 of the U phase coil 640 are received in the slots 22s are referred to as received positions U1, U2, U3, U4, ..., U47, and U48, as seen from the U phase terminal 72 toward the neutral point N. The positions in which the coil segments 80 of the V phase coil 650 are received in the slots 22s are referred to as received positions V1, V2, V3, V4, ..., V47, and V48, as seen from the V phase terminal 74 toward the neutral point N. The positions in which the coil segments 80 of the W phase coil 660 are received in the slots 22s are represented as received positions W1, W2, W3, W4, ..., W47, and W48, as seen from the W phase terminal 76 toward the neutral point N. The initial letters U, V, and W in these received position notations indicate the coil segments 80 that constitute the U phase coil 640, V phase coil 650 and W phase coil 660, respectively. The numbers indicate a connection order from the input terminal 70 of each phase toward the neutral point N.

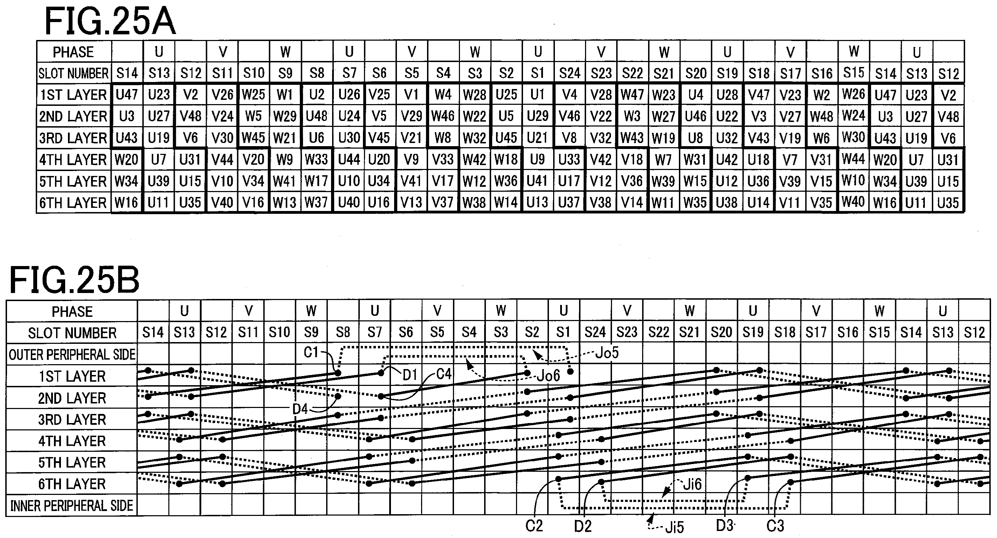

FIG. 25A and 25B are views explaining a connection structure of the coil segments 80 constituting the three-phase coil 624 shown in FIG. 24, wherein FIG. 25A is a layout diagram of the coil segments 80, and FIG. 25B is a view explaining an outline of the connection structure of the U phase coil 640. FIGS. 26A-26C are views explaining the connection structure of the coil segments 80 constituting the three-phase coil 624 shown in FIG. 25A and 25B, wherein FIG. 26A is a view explaining an overall structure of the connection structure of the three-phase coil 624, FIG. 26B is a view explaining details of the connection structure of the U phase coil 640, and FIG. 26C is a view explaining types of coil segments 80 used to constitute the three-phase coil 624. In FIG. 25B, broken lines represent the bridge portion 84 side of the coil segments 80, and solid lines represent the welded portion 88 side of the coil segments 80. The same is true for FIGS. 26A-26C.

As shown in FIG. 25A and 25B, the V phase coil 650 has the same connection structure as the U phase coil 640, but the connection structure is shifted leftward (as seen in FIG. 25A and 25B) by four times as large as the above-described pitch of the slots 22s in the circumferential direction. The W phase coil 660 has the same connection structure as the U phase coil 640, but the connection structure is shifted leftward by eight times as large as the pitch of the slots 22s in the circumferential direction. Therefore, the following description will focus on the connection structure of the coil segments 80 constituting the U phase coil 640, and explanation of the other connection structures will be omitted where appropriate.

The U phase coil 640 includes two outer-peripheral-end connection portions Jo5, Jo6, two inward winding portions 640a, 640c, two outward winding portions 640b, 640d and two inner-peripheral-end connection portions Ji5, Ji6. The inward winding portion 640a, outward winding portion 640b, inward winding portion 640c and outward winding portion 640d have the same connection structures as the inward winding portion 42a, outward winding portion 42b, inward winding portion 44a and outward winding portion 44b, respectively, in the above-described first embodiment. An inward-winding start position C1 is the received position of one of the coil segments 80 in one of the first and second layers at the first connection from the one of the first and second layers to the other in the outer-layer connection portion Ro of the inward winding portion 640a. The inward-winding start position C1 corresponds to "winding start position" in the present invention. An inward-winding end position C2 is the received position of one of the coil segments 80 in the sixth layer at the last connection from the fifth to sixth layer in the inner-layer connection portion Ri of the inward winding portion 640a. The inward-winding end position C2 corresponds to "inner-peripheral-side end portion of the inward winding portion" in the present embodiment. An outward-winding start position C3 is the received position of one of the coil segments 80 in the sixth layer at the first connection from the sixth to fifth layer in the inner-layer connection portion Ri of the outward winding portion 640b. The outward-winding start position C3 corresponds to "inner-peripheral-side end portion of the outward winding portion" in the present invention. An outward-winding end position C4 is the received position of one of the coil segments 80 in the above-described other of the first and second layers at the last connection from the above-described one of the first and second layers to the other in the outer-layer connection portion Ro of the outward winding portion 640b. An inward-winding start position D1 is the received position of one of the coil segments 80 in one of the first and second layers at the first connection from the one of the first and second layers to the other in the outer-layer connection portion Ro of the inward winding portion 640c. An inward-winding end position D2 is the received position of one of the coil segments 80 in the sixth layer at the last connection from the fifth to sixth layer in the inner-layer connection portion Ri of the inward winding portion 640c. The inward-winding end position D2 corresponds to "inner-peripheral-side end portion of the inward winding portion" in the present invention. An outward-winding start position D3 is the received position of one of the coil segments 80 in the sixth layer at the first connection from the sixth to fifth layer in the inner-layer connection portion Ri of the outward winding portion 640d. The outward-winding start position D3 corresponds to "inner-peripheral-side end portion of the outward winding portion" in the present invention. An outward-winding end position D4 is the received position of one of the coil segments 80 in the above-described other of the first and second layers at the last connection from the above-described one of the first and second layers to the other in the outer-layer connection portion Ro of the outward winding portion 640d.

The inner-peripheral-end connection portion Ji5 is a portion in which the coil segments 80 are disposed between the inward-winding end position C2 and the outward-winding start position C3. The inner-peripheral-end connection portion Ji6 is a portion in which the coil segments 80 are disposed between the inward-winding end position D2 and the outward-winding start position D3. The outer-peripheral-end connection portion Jo5 is a portion in which the coil segments 80 are disposed between the U phase terminal 72 and the inward-winding start position C1, and connects between the coil segments 80 received in the first layer. The outer-peripheral-end connection portion Jo6 is a portion in which the coil segments 80 are disposed between the outward-winding end position C4 and the inward-winding start position D1, and connects between the coil segments 80 received in the first layer.

The connection structures of the outer-peripheral-end connection portion Jo5, inward winding portion 640a, inner-peripheral-end connection portion Ji5 and outward winding portion 640b are connection structures of "received positions U1 to U24" shown in FIG. 25B, and are identical to the connection structures of the outer-peripheral-end connection portion Jo1, inward winding portion 42a, inner-peripheral-end connection portion Ji1 and outward winding portion 42b in the above-described first embodiment. The connection structures of the outer-peripheral-end connection portion Jo6, inward winding portion 640c, inner-peripheral-end connection portion Ji6 and outward winding portion 640d are connection structures of "received positions U25 to U48" shown in FIG. 25B, and are identical to the connection structures of the outer-peripheral-end connection portion Jo2, inward winding portion 44a, inner-peripheral-end connection portion Ji2 and outward winding portion 44b in the above-described first embodiment.

The outward-winding end position C4 of the outward winding portion 640b is connected to the inward winding portion 640c via the outer-peripheral-end connection portion Jo6. Specifically, the second layer of slot number S7 and the first layer of slot number S7 are connected via the outer-peripheral-end connection portion Jo6.

Like each of the inward winding portion 42a and outward winding portion 42b in the above-described first embodiment, each of the inward winding portion 640a and outward winding portion 640b includes the outer-layer connection portion Ro, outer-layer-side transfer portion SWo, intermediate-layer connection portion Rm, inner-layer-side transfer portion SWi and inner-layer connection portion Ri. Like each of the inward winding portion 44a and outward winding portion 44b in the above-described first embodiment, each of the inward winding portion 640c and outward winding portion 640d includes the outer-layer connection portion Ro, outer-layer-side transfer portion SWo, intermediate-layer connection portion Rm, inner-layer-side transfer portion SWi and inner-layer connection portion Ri.

Regarding the connection order of the coil segments 80 as seen from side of the U phase terminal 72, the connection of the coil segments 80 received in the third layer is made after the outer-layer connection portion Ro in the inward winding portion 640a. That is, the connection of the coil segments 80 received in the third layer as seen from side of the U phase terminal 72 is made after the outer-layer connection portion Ro of the inward winding portion 640a has been caused to extend in the circumferential direction, or alternatively, after the outer-layer connection portion Ro of the inward winding portion 640a has been caused to extend in the circumferential direction and the inner-layer connection portion Ri of the outward winding portion 640b has been caused to extend in the circumferential direction. The connection of the coil segments 80 received in the fourth layer is made after the outer-layer connection portion Ro in the inward winding portion 640a. That is, the connection of the coil segments 80 received in the fourth layer as seen from side of the U phase terminal 72 is made after the outer-layer connection portion Ro of the inward winding portion 640a has been caused to extend in the circumferential direction, or alternatively, after the outer-layer connection portion Ro of the inward winding portion 640a has been caused to extend in the circumferential direction and the inner-layer connection portion Ri of the outward winding portion 640b has been caused to extend in the circumferential direction. Thus, the connection of the coil segments 80 received in the third layer as seen from side of the U phase terminal 72 and the connection of the coil segments 80 received in the fourth layer as seen from side of the U phase terminal 72 are both made after the outer-layer connection portion Ro in the inward winding portion 640a has been caused to extend in the circumferential direction.

As shown in FIG. 26C, the types of coil segments 80 used to constitute the three-phase coil 624 are substantially the same as those in the above-described first embodiment,

FIGS. 27A-27C are views explaining a maximum value of a voltage difference between adjacent coil segments 80 in the same slot 22s in the three-phase coil 624 shown in FIGS. 26A-26C, wherein FIG. 27A is a view explaining a relationship between the voltage difference between the adjacent coil segments 80 and a connection order of the coil segments 80 as seen from side of an input terminal 70, FIG. 27B is a view showing the voltage difference between the adjacent coil segments 80, and FIG. 27C is a view showing the connection order of the coil segments 80 as seen from side of the input terminal 70 and the voltage difference between the adjacent coil segments 80 where the coil segments 80 of different phases are adjacent in the same slots 22s.

As shown in FIG. 27A, the coil segments 80 are arranged such that two kinds of slots 22s are alternately arranged in the circumferential direction, wherein each first slot 22s (as one of the two kinds of slots 22) receive therein 6 coil segments 80 of the same phase, while each second slot 22s (as the other of the two kinds of slots 22) receive therein 3 coil segments 80 of one of three phases and other 3 coil segments 80 of another one of three phases. In FIG. 27A, received positions in which adjacent coil segments 80 of different phases are received within the same slots 22s are indicated by white-on-black text.

Hereinafter, with reference to FIG. 24, there will be described the voltage difference between adjacent coil segments 80 within the same slots 22s. When the rotary electric machine 610 is driven to be rotated, three-phase AC voltage is applied to the U phase terminal 72, V phase terminal 74 and W phase terminal 76. The voltage difference between adjacent coil segments 80 within the same slots 22s is, between the coil segments 80 of the U phase coil 640, between the coil segments 80 of the V phase coil 650, between the coil segments 80 of the W phase coil 660, between the coil segments 80 of the U phase coil 640 and the V phase coil 650, between the coil segments 80 of the V phase coil 650 and the W phase coil 660, and between the coil segments 80 of the W phase coil 660 and the U phase coil 640. The voltage difference can be calculated by using different approaches when it is between the coil segments 80 of the same phase and when it is between the coil segments 80 of different phases. Therefore, there will be described a case between the coil segments 80 of the U phase coil 640 and a case between the coil segments 80 of the U phase coil 640 and the V phase coil 650, as representative examples.

For easier understanding, the following description will be simplified by assuming that the coil segments 80 is wound around the stator core 22 that is made of electromagnetic steel sheet, and function as ideal inductive reactance. Here, an impedance, which is the inductive reactance between the U phase terminal 72 and the V phase terminal 74, is defined as impedance Z2 [Ω].

Between the U phase terminal 72 and the neutral point N, there are a total of 47 connections consisting of 24 bridge-portion-side connections and 23 welded-portion-side connections, which are alternately arranged. In each of the 24 bridge-portion-side connections, the connection is made by the bridge portion 84 of corresponding one of the coil segments 80. In each of the 23 welded-portion-side connections, the connection is made by cooperation of the distal end portions 82t (welded portions 88) of a corresponding pair of the coil segments 80 that are welded to each other. The same is true between the V phase terminal 74 and the neutral point N.

For example, when a voltage Vo [V] is applied to the U phase terminal 72 relative to the V phase terminal 74, a current Io (= Vo/Z2) [A] flows between the U phase terminal 72 and the V phase terminal 74. In this case, (1/94 × Vo) [V] is applied onto side of the bridge portion 84 side and side of welded portion 88 of the coil segments 80 between the U phase terminal 72 and the V phase terminal 74. In the U phase coil 640, the electric potential is reduced by (1/94 × Vo) [V] with each increase in the connection order as seen from side of the U phase terminal 72 toward the neutral point N. In the V phase coil 650, the electric potential is increased by (1/94 × Vo) [V] with each increase in the connection order as seen from side of the V phase terminal 74 toward the neutral point N.

First, there will be described a case in which adjacent coil segments 80 in the same slots 22s are the same phase, for example, a case in which one coil segment 80 of the U phase coil 640 received in connection order Nu4 is adjacent to another coil segment 80 of the U phase coil 640 received in connection order Nu5. The connection orders Nu4 and Nu5 are equivalent to the numerical portion of the received position (U1-U48). In this case, the voltage difference between the adjacent coil segments 80 is calculated by multiplying the difference in the connection order (|Nu4-Nu5|) from the U phase terminal 72 (which is the input terminal common to the adjacent coil segments 80) toward the neutral point N, by (1/94 × Vo) [V]. It is noted that the maximum value of the difference in connection order of the adjacent coil segments 80 of the same phase as seen from side of the common input terminal 70 toward the neutral point N is 47, which is a difference between the maximum value (=48) and the minimum value (=1) of the connection order.

Next, there will be described a case in which adjacent coil segments 80 in the same slot 22s are of different phase, for example, a case in which one coil segment 80 of the U phase coil 640 received in connection order Nu6 is adjacent to another coil segment 80 of the V phase coil 650 received in connection order Nv6. The connection order Nu6 is equivalent to the numerical portion of the received position (U1-U48). The connection order Nv6 is equivalent to the numerical portion of the received position (V1-V48). In this case, a total number of the bridge portions 84 and the welded portions 88 of coil segments 80, which are located between the received position of one coil segment 80 and the received position of another coil segment 80, is defined as total T. The total T is a difference between 96 and a sum of connection order Nu6 and connection order Nv6 {= 96-(Nu6+Nv6)}. Where the coil segment 80 of the U phase coil 640 and the coil segment 80 of the V phase coil 650 are adjacent to each other in the same slot 22s, the voltage difference between the adjacent coil segments 80 is calculated by multiplying the total T by (1/94 × Vo) [V]. The voltage difference can be calculated in a similar manner also where the coil segment 80 of the V phase coil 650 and the coil segment 80 of the W phase coil 660 are adjacent to each other in the same slot 22s, and also where the coil segment 80 of the W phase coil 660 and the coil segment 80 of the U phase coil 640 are adjacent to each other in the same slot 22s.

Referring back to FIGS. 27A-27C, as shown in FIG. 27B, the voltage difference between the coil segments 80 received in the third and fourth layers of slot number S12, and the voltage difference between the coil segments 80 received in the third and fourth layers of slot number S16, are both maximum values (= 59/94 × Vo). In FIG. 27B, the areas in which the voltage difference between adjacent coil segments 80 is at its maximum are shown in white-on-black text. As described above, where the coil segments 80 of the same phase are adjacent within the same slots 22s, the maximum value of the voltage difference between the adjacent coil segments 80 divided by (1/94 × Vo) [V] is 47.

FIG. 27C is a view showing the connection order of the coil segments 80 as seen from side of the input terminal 70 of each phase and the voltage difference between adjacent coil segments 80 where the coil segments 80 of different phases are adjacent in the same slots 22s.

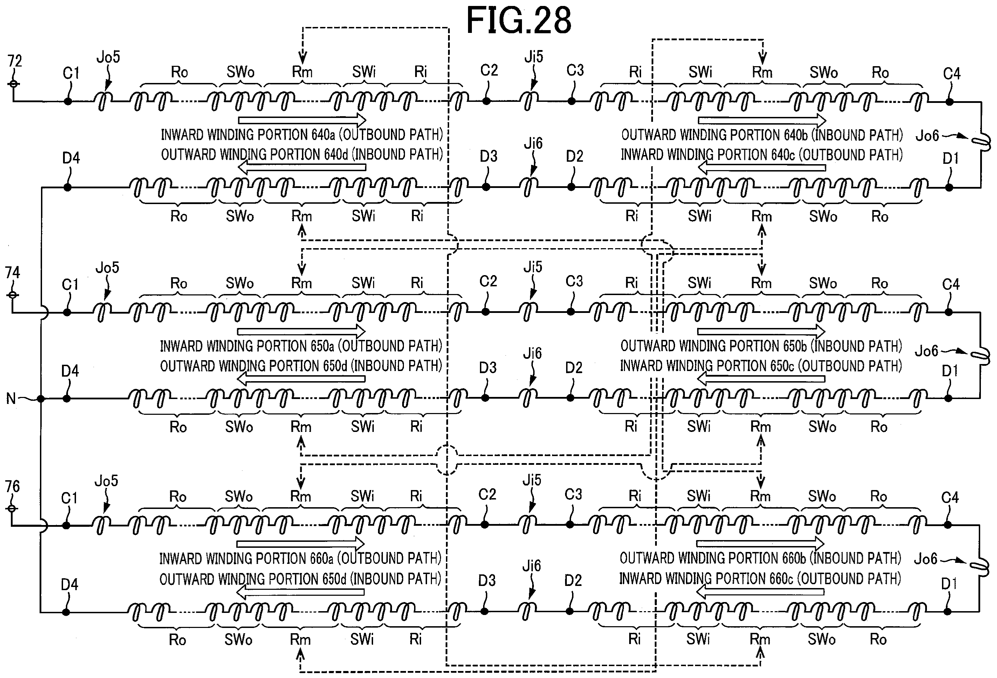

FIG. 28 is a view explaining a positional relationship among the coil segments 80 in the three-phase coil 624 where the coil segments 80 of different phases are adjacent in the same slots 22s in the three-phase coil 624 shown in FIGS. 26A-26C.

As shown in FIG. 28, between the U phase terminal 72 and the neutral point N, the outer-peripheral-end connection portion Jo5, inward winding portion 640a, inner-peripheral-end connection portion Ji5, outward winding portion 640b, outer-peripheral-end connection portion Jo6, inward winding portion 640c, inner-peripheral-end connection portion Ji6 and outward winding portion 640d are connected in series. Where the inward winding portion 640a and the inward winding portion 640c are regarded as an outbound path from the outer peripheral side toward the inner peripheral side, the outward winding portion 640b and the outward winding portion 640d are regarded as an inbound path from the inner peripheral side toward the outer peripheral side. Between the V phase terminal 74 and the neutral point N, the outer-peripheral-end connection portion Jo5, inward winding portion 650a, inner-peripheral-end connection portion Ji5, outward winding portion 650b, outer-peripheral-end connection portion Jo6, inward winding portion 650c, inner-peripheral-end connection portion Ji6 and outward winding portion 650d are connected in series. Between the W phase terminal 76 and the neutral point N, the outer-peripheral-end connection portion Jo5, inward winding portion 660a, inner-peripheral-end connection portion Ji5, outward winding portion 660b, outer-peripheral-end connection portion Jo6, inward winding portion 660c, inner-peripheral-end connection portion Ji6 and outward winding portion 660d are connected in series.

Where the coil segments 80 of different phases are adjacent within the same slots 22s, the adjacent coil segments 80 are a combination of coil segments 80 received in the third layer and coil segments 80 received in the fourth layer. Regarding the connection order of the coil segments 80 as seen from side of the input terminal 70 of each phase, the connection to the coil segments 80 received in the third layer is made after the outer-layer connection portion Ro of the inward winding portion of each phase coil. Regarding the connection order of the coil segments 80 as seen from side of the input terminal 70 of each phase, the connection to the coil segments 80 received in the fourth layer is made after the outer-layer connection portion Ro of the inward winding portion of each phase coil. In FIG. 28, where the coil segments 80 of different phases are adjacent within the same slots 22s, the positional relationship between those adjacent coil segments 80 is indicated by broken arrows.

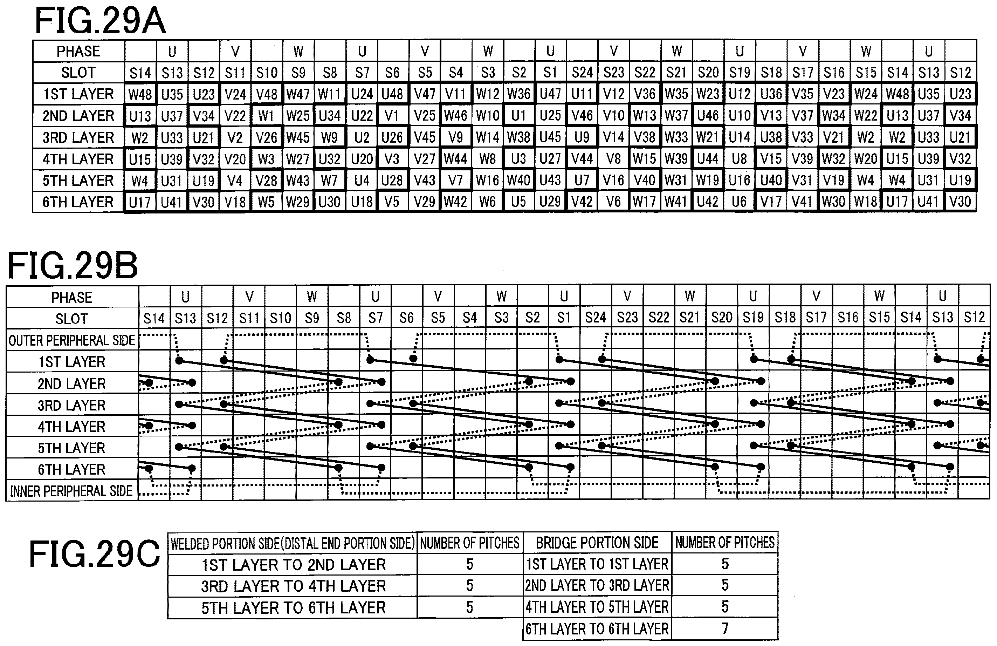

FIGS. 29A-29C are views explaining a connection structure of coil segments 80 constituting a three-phase coil 924 of comparative example 1, wherein FIG. 29A is a layout diagram of the coil segments 80, FIG. 29B is a view explaining an outline of the connection structure of a U phase coil 940, and FIG. 29C is a view explaining types of coil segments 80 used to constitute the three-phase coil 924. The three-phase coil 924 has substantially the same construction as the three-phase coil 824 in the above-described comparative example 1, except that the phase coil 840, V phase coil 850 and W phase coil 860 are replaced by the U phase coil 940, V phase coil 950 and W phase coil 960, respectively. In this comparative example 2, the description will be focused on parts that are different from those of the comparative example 1, and parts that are substantially common in function to those of the comparative example 1 will be given the same reference numerals and explanations will be omitted as appropriate.

In the FIG. 29A, each area of the received positions in which the coil segments 80 of the same phase is surrounded by thick solid line.

As shown in FIG. 29A, the V phase coil 950 has the same connection structure as the U phase coil 940, but the connection structure is shifted leftward (as seen in FIG. 29A) by four times as large as the above-described pitch of the slots 22s in the circumferential direction. The W phase coil 960 has the same connection structure as the U phase coil 940, but the connection structure is shifted leftward by eight times as large as the pitch of the slots 22s in the circumferential direction. Therefore, the following description will focus on the connection structure of the coil segments 80 of the U phase coil 940, and explanation of the other connection structures will be omitted where appropriate.

As shown in FIG. 29B, the U phase coil 940 has the coil segments 80 each of which is received at the pair of arm portions 82 on side of the bridge portion 84 in the first layer, the coil segments 80 each of which is received at the pair of arm portions 82 in the second and third layers and the coil segments 80 each of which is received at the pair of arm portions 82 in the fourth and fifth layers, and includes a portion in which the distal end portions 82t of the coil segments 80 are sequentially connected in a zigzag pattern from the outer peripheral side toward the inner peripheral side. The U phase coil 940 has the coil segments 80 each of which is received at the pair of arm portions 82 on side of the bridge portion 84 in the sixth layer, the coil segments 80 each of which is received at the pair of arm portions 82 in the fifth and fourth layers and the coil segments 80 each of which is received at the pair of arm portions 82 in the third and second layers, and includes a portion in which the distal end portions 82t of the coil segments 80 are sequentially connected in a zigzag pattern from the inner peripheral side toward the outer er peripheral side. Thus, in the U phase coil 940, a structure in which the portion connected in the zigzag pattern from the outer peripheral side to the inner peripheral side and the portion connected in the zigzag pattern from the inner peripheral side to the outer peripheral side are connected together is considered as one unit, and this structure is repeated in the circumferential direction.

As shown in FIG. 29C, a number of pitches on side of the bridge portion 84 of the coil segments 80 which are received in the sixth layer is 7, and a number of pitches on side of the bridge portion 84 and a number of pitches on side of the welded portion 88 of the other coil segments 80 are both 5, wherein the number of pitches on side of the bridge portion 84 is represented by each broken line shown in FIG. 29B, and the number of pitches on side of the welded portion 88 is represented by each solid line shown in FIG. 29B. Thus, 2 types of the coil segments 80 are used to constitute the three-phase coil 924.

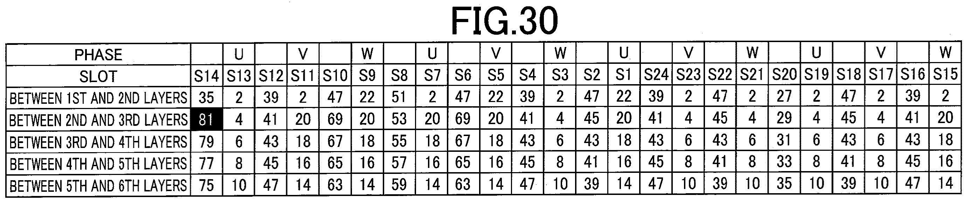

FIG. 30 is a view explaining a maximum value of a voltage difference between adjacent coil segments in the same slot 22s in the three-phase coil 924 shown in FIGS. 29A-29C, and showing the voltage difference between the adjacent coil segments 80, wherein each number shown in FIG. 30 is obtained by diving the voltage difference by (1/94 × Vo) [V].

As shown in FIG. 30, the voltage difference between the coil segments 80 received in the second and third layers of slot number S14 is a maximum value (= 81/94 × Vo). In FIG. 30, the area in which the voltage difference between adjacent coil segments 80 is at its maximum is shown in white-on-black text. In the above-described seventh embodiment, the maximum value of the voltage difference between adjacent coil segments 80 in the same slots 22s is reduced by approximately 27.2 [%] {= 1-(59/81)} as compared to the comparative example 2.

The seventh embodiment provides substantially the same effects as the above-described first embodiment, owing to the construction that is substantially the same as that of the first embodiment.

In the present seventh embodiment, (a) the three-phase coil 624 is Y-connected, (b) each of the U phase coil 640, V phase coil 650 and W phase coil 660 includes the single coil portion between the input terminal 70 and the neutral point N, (c) the U phase coil 640 includes the two inward winding portions 640a, 640c, the two outward winding portions 640b, 640d and the two inner-peripheral-end connection portions Ji5, Ji6, and the V phase coil 650 and W phase coil 660 have the same construction as the U phase coil 640, and (d) the connection structure of the coil segments 80 in the U phase coil 640, the connection structure of the coil segments 80 in the V phase coil 650 and the connection structure of the coil segments 80 in the W phase coil 660 are the same as one another. Owing to constructions of the above-described feature (c), where the three-phase coil 624 is Y-connected, it is possible to easily make the coil segments 80 to be common to a case in which a single coil portion is connected in series between the input terminal 70 of each phase coil and the neutral point N and a case in which two coil portions are connected in parallel between the input terminal 70 of each phase coil and the neutral point N.

In the present seventh embodiment, each of the U phase coil 640, V phase coil 650 and W phase coil 660 in the three-phase coil 624 is constructed such that, in the two inward winding portions 640a, 640c, the coil segments 80, which are the same in terms of the connection order as seen from side of the input terminal 70, are received in the pair of the slots 22s that are adjacent to each other in the circumferential direction, and such that, in the two outward winding portions 640b, 640d, the coil segments 80, which are the same in terms of the connection order as seen from side of the input terminal 70, are received in the pair of the slots 22s that are adjacent to each other in the circumferential direction. In this way, by inserting the coil segments 80 with the same connection order as seen from side of the input terminal 70 into the slots 22s adjacent in the circumferential direction in the two inward winding portions 640a, 640c, the connection structures in the two inward winding portions 640a, 640c can be identical. By inserting the coil segments 80 with the same connection order as seen from side of the input terminal 70 into the slots 22s adjacent in the circumferential direction in the two outward winding portions 640b, 640d, the connection structures in the two outward winding portions 640b, 640d can be identical. In this way, where the connection structure of the coil segments 80 is the same between the two inward winding portions 640a, 640c and the connection structure of the coil segments 80 is the same between the two outward winding portions 640b, 640d, the connection structure is simpler and less complicated than where the connection structure of the coil segments 80 is not the same between the two inward winding portions 640a, 640c and the connection structure of the coil segments 80 is not the same between the two outward winding portions 640b, 640d. This allows the processes of bending and welding the coil segments 80 to be repeated in a repeated pattern, thereby improving the workability in the process of winding the three-phase coil 624, for example.

The above-described embodiments of the present invention are merely examples, and the present invention can be embodied in various forms with various modifications and improvements made based on the knowledge of those skilled in the art without departing from the spirit of the present invention.

In the first through fifth embodiments, the connection structure of the coil segments 80 in the U phase coil 40, the connection structure of the coil segments 80 in the V phase coil 50 and the connection structure of the coil segments 80 in the W phase coil 60 are identical to one another, but the present invention is not limited to these details. The present invention is also applicable to an example in which the connection structure of the coil segments 80 in the U phase coil 40, the connection structure of the coil segments 80 in the V phase coil 50 and the connection structure of the coil segments 80 in the W phase coil 60 are not identical to one another. For example, the three-phase coil be a combination of any one of the U phase coils 40, 140, 240, 340, 440, any one of the V phase coils 50, 150, 250, 350, 450 and any one of the W phase coils 60, 160, 260, 360, 460 in the first through fourth embodiments. Where the phase coil of the connection structure of the first through fourth embodiments and the phase coil of the connection structure of the fifth embodiment are combined, it is preferable that the phase coil of the connection structure of the fifth embodiment and the phase coil of the connection structure of the first through fourth embodiments are oriented in opposite directions such that the bridge portion 84 and the welded portion 88 of the coil segments 80 of those phase coils do not cross each other over three-dimensionally.

In the above-described first through fifth embodiments, in the first coil portion 42 and second coil portion 44 of the U phase coil 40, the first coil portion 52 and second coil portion 54 of the V phase coil 50 and the first coil portion 62 and second coil portion 64 of the W phase coil 60, the coil segments 80 with the same connection order as seen from side of the input terminal 70 of each phase are received in the slots 22s adjacent in the circumferential direction. However, the present invention is not limited to these details. For example, in the first coil portion 42 and second coil portion 44 of the U phase coil 40, the first coil portion 52 and second coil portion 54 of the V phase coil 50 and the first coil portion 62 and second coil portion 64 of the W phase coil 60, the coil segments 80 with the same connection order as seen from side of the input terminal 70 may be received in the slots 22s that are not adjacent in the circumferential direction.

In the above-described seventh embodiment, in the inward winding portions 640a, 640c, each of the outer-layer connection portion Ro, intermediate-layer connection portion Rm and the inner-layer connection portion Ri extends in the same circumferential direction. However, in the seventh embodiment, like in the above-described second and third embodiments, one of the outer-layer connection portion Ro, intermediate-layer connection portion Rm and the inner-layer connection portion Ri in the inward winding portions 640a, 640c may extend in the opposite circumferential direction to the others.

In the above-described seventh embodiment, each of the U phase coil 640, V phase coil 650 and W phase coil 660 includes the outer-peripheral-end connection portion Jo5, Jo6. However, each of the U phase coil 640, V phase coil 650 and W phase coil 660 may not include the outer-peripheral-end connection portion Jo5, Jo6, like in the above-described fourth embodiment.

In the above-described seventh embodiment, the inward-winding start positions C1, D1 of the inward winding portions 650a, 650c of the V phase coil 650 are shifted from the inward-winding start positions C1, D1 of the inward winding portions 640a, 640c of the U phase coil 640 by four times as large as the pitch of the slots 22s in the circumferential direction, and the inward-winding start positions C1, D1 of the inward winding portions 660a, 660c of the W phase coil 660 are shifted from the inward-winding start positions C1, D1 of the inward winding portions 640a, 640c of the U phase coil 640 by eight times as large as the pitch of the slots 22s in the circumferential direction. However, the present invention is not limited to these details. For example, the winding start positions C1, D1 of the U phase coil 640, V phase coil 650 and W phase coil 660 may be set in predetermined positions that are predetermined such that the maximum value of the voltage difference between the coil segments 80 of the different phases that are received in the third and fourth layers in the same slot 22s is reduced.

In the above-described seventh embodiment, the connection structure of the coil segments 80 in the U phase coil 640, the connection structure of the coil segments 80 in the V phase coil 650 and the connection structure of the coil segments 80 in the W phase coil 660 are identical to one another, but the present invention is not limited to these details. For example, the connection structure of the coil segments 80 in the U phase coil 640, the connection structure of the coil segments 80 in the V phase coil 650 and the connection structure of the coil segments 80 in the W phase coil 660 may not be identical to one another.

In the above-described seventh embodiment, in the two inward winding portions 640a, 640c of the U phase coil 640, the two inward winding portions 650a, 650c of the V phase coil 650 and the two inward winding portions 660a, 660c of the W phase coil 660, the coil segments 80 with the same connection order as seen from side of the input terminal 70 of each phase are received in the slots 22s adjacent in the circumferential direction. However, the present invention is not limited to these details. For example, in the two inward winding portions 640a, 640c of the U phase coil 640, the coil segments 80 with the same connection order as seen from side of the input terminal 70 may be received in the slots 22s that are not adjacent in the circumferential direction.

In the above-described first through sixth embodiments, the inward-winding start positions A1, B1, C1, D1 of the outer-layer connection portion Ro are located in the received positions in the first layer. However, the present invention is not limited to these details. For example, the inward-winding start positions A1, B1, C1, D1 of the outer-layer connection portion Ro may be located in the received positions in the second layer.

In the above-described first, second, third and fifth embodiments, circumferential lengths of the inner-peripheral-end connection portions Ji1, Ji2, which are constituted by the coil segments 80 whose pairs of arm portions 82 are both received in the sixth layer, are five times as large as the pitch of the slots 22s and seven times as large as the pitch of the slots 22s. In the above-described fourth embodiment, there is no coil segment 80 whose pair of arm portions 82 are both received in the sixth layer, the circumferential lengths of the inner-peripheral-end connection portions Ji1, Ji2, each of which is constituted by the pair of the coil segments 80 connected at their welded portions 88, are five times as large as the pitch of the slots 22s and seven times as large as the pitch of the slots 22s. In the above-described sixth embodiment, the circumferential lengths of the inner-peripheral-end connection portions Ji3, Ji4, which are constituted by the coil segments 80 whose pairs of arm portions 82 are both received in the sixth layer, are both six times as large as the pitch of the slots 22s. In the above-described seventh embodiment, the circumferential lengths of the inner-peripheral-end connection portions Ji5, Ji6, which are constituted by the coil segments 80 whose pairs of arm portions 82 are both received in the sixth layer, are five times as large as the pitch of the slots 22s and seven times as large as the pitch of the slots 22s. The present invention is not limited to these details. For example, where the total number of the slots 22s is not smaller than 48, the circumferential lengths of the inner-peripheral-end connection portions Ji1, Ji2, Ji3, Ji4, Ji5, Ji6 which are constituted by the coil segments 80 whose pairs of arm portions 82 are both received in the sixth layer, can be 17 times as large as the pitch of the slots 22s and 19 times as large as the pitch of the slots 22s. Further, where the total number of the slots 22s is not smaller than 48 and there is no coil segment 80 whose pair of arm portions 82 are both received in the sixth layer, the circumferential lengths of the inner-peripheral-end connection portions Ji1, Ji2, each of which is constituted by the pair of the coil segments 80 connected at their welded portions 88, can be 17 times as large as the pitch of the slots 22s and 19 times as large as the pitch of the slots 22s.

### NOMENCLATURE OF ELEMENTS

10; 110; 210; 310; 410; 510; 610: rotary electric machine
22: stator core
22s: slots
24; 124; 224; 324; 424; 524; 624: three-phase coil
30: rotor
40; 140; 240; 340; 440; 540: U phase coil (phase coil)
42, 52, 62; 142, 152, 162; 242, 252, 262; 342, 352, 362; 442, 452, 462: first coil portion
42a, 44a, 52a, 54a, 62a, 64a; 142a, 144a, 152a, 154a, 162a, 164a; 242a, 244a, 252a, 254a, 262a, 264a; 342a, 344a, 352a, 354a, 362a, 364a; 442a, 444a, 452a, 454a, 462a, 464a; 542a, 544a, 552a, 554a, 562a, 564a; 640a, 640c, 650a, 650c, 660a, 660c: inward winding portion
42b, 44b, 52b, 54b, 62b, 64b; 142b, 144b, 152b, 154b, 162b, 164b; 242b, 244b, 252b, 254b, 262b, 264b; 342b, 344b, 352b, 354b, 362b, 364b, 442b, 444b, 452b, 454b, 462b, 464b; 542b, 544b, 552b, 554b, 562b, 564b; 640b, 640d, 650b, 650d, 660b, 660d: outward winding portion
44, 54, 64; 144, 154, 164; 244, 254, 264; 344, 354, 364; 444, 454, 464: second coil portion
50; 150; 250; 350; 450; 550: V phase coil (phase coil)
60; 160; 260; 360; 460; 560: W phase coil (phase coil)
72: U phase terminal (input terminal)
74: V phase terminal (input terminal)
76: W phase terminal (input terminal)
80: coil segment
82: pair of arm portions
82t: distal end portion
84: bridge portion
640: U phase coil (phase coil, coil portion)
650: V phase coil (phase coil, coil portion)
660: W phase coil (phase coil, coil portion)
A1, B1, C1, D1: inward-winding start position (winding start position)
A2, B2, C2, D2: inward-winding end position
   (inner-peripheral-side end portion of inward winding portion)
A3, B3, C3, D3: outward-winding start position
   (inner-peripheral-side end portion of outward winding portion)
CL: axis
Ji1, Ji2, Ji3, Ji4, Ji5, Ji6: inner-peripheral-end connection portion (connection portion)
N: neutral point
Ri: inner-layer connection portion
Rm: intermediate-layer connection portion
Ro: outer-layer connection portion
SWi: inner-layer-side transfer portion
SWo: outer-layer-side transfer portion

## Claims

1. A rotary electric machine (10;110;210;310;410;510;610) comprising:
a cylindrical-shaped stator core (22) extending in a direction of an axis (CL) and having a plurality of slots (22s) that are arranged at a predetermined pitch in a circumferential direction of the stator core (22);
a three-phase coil (24;124;224;324;424;524;624) including a plurality of coil segments (80) received in the slots (22s), each of the coil segments (80) including a pair of arm portions (82) and a bridge portion (84) connecting between base portions of the arm portions (82), the three-phase coil (24;124;224;324;424;524;624) being wound in a distributed winding in which each pair of the coil segments (80) are received in different ones of the slots (22s) such that a distal end portion (82t) of one of the pair of arm portions (82) of one of the each pair of the coil segments (80) and a distal end portion (82t) of one of the pair of arm portions (82) of the other of the each pair of the coil segments (80) are welded to each other; and
a rotor (30) disposed on an inner peripheral side of the stator core (22),
wherein a number of the slots (22s) is six times a number of poles of the rotor (30),
wherein each of the slots (22s) receives therein six of the coil segments (80) such that the received six coil segments (80) are located in respective received positions located in first, second, third, fourth, fifth and sixth layers as seen from an outer peripheral side of the stator core (22) toward the inner peripheral side;
wherein the coil segments (80) of the same phase are received in the first, second and third layers in a first pair of the slots (22s) which are adjacent to each other in the circumferential direction, and are received in the fourth, fifth and sixth layers in a second pair of the slots (22s) which are adjacent to each other in the circumferential direction and which are shifted in the circumferential direction from the first pair of the slots (22s) by the predetermined pitch, such that the coil segments (80) received in the third and fourth layers in a same one of the slots (22s), which is common to both of the first and second pairs of the slots (22s), are of different phases,
wherein a phase coil (40,50,60;140,150,160;240,250,260;340,350,360; 440,450,460;540,550,560;640,650,660) of each phase in the three-phase coil (24;124;224;324;424;524;624) includes an inward winding portion (42a,44a,52a,54a, 62a,64a;142a,144a,152a,154a,162a,164a;242a,244a,252a,254a,262a,264a;342a,344a,35 2a,354a,362a,364a;442a,444a,452a,454a,462a,464a;542a,544a,552a,554a,562a,564a;64 0a,640c,650a,650c,660a,660c) in which the coil segments (80) are connected from the outer peripheral side toward the inner peripheral side, an outward winding portion (42b,44b,52b,54b,62b,64b;142b,144b,152b,154b,162b,164b;242b,244b,252b,254b, 262b,264b;342b,344b,352b,354b,362b,364b;442b,444b,452b,454b,462b,464b;542b,544 b,552b,554b,562b,564b;640b,640d,650b,650d,660b,660d) in which the coil segments (80) are connected from the inner peripheral side toward the outer peripheral side, and a connection portion (Ji1,Ji2,Ji3,Ji4,Ji5,Ji6) connecting between an inner-peripheral-side end portion (A2,B2,C2,D2) of the inward winding portion and an inner-peripheral-side end portion (A3,B3,C3,D3) of the outward winding portion,
wherein each of the inward winding portion and the outward winding portion includes an outer-layer connection portion (Ro) in which the coil segments (80) extending in the circumferential direction are connected in the first and second layers, and
wherein, regarding a connection order of the coil segments (80) as seen from side of an input terminal (72, 74, 76) of the phase coil, connection of the coil segments (80) received in the third layer and connection of the coil segments (80) received in the fourth layer are made after the outer-layer connection portion (Ro) in the inward winding portion.

2. The rotary electric machine (10;110;210;310;410;510;610) according to claim 1,
wherein each of the inward winding portion (42a,44a,52a,54a,62a,64a; 142a,144a,152a,154a,162a,164a;242a,244a,252a,254a,262a,264a;342a,344a,352a,354a, 362a,364a;442a,444a,452a,454a,462a,464a;542a,544a,552a,554a,562a,564a;640a,640c, 650a,650c,660a,660c) and the outward winding portion (42b,44b,52b,54b,62b,64b; 142b,144b,152b,154b,162b,164b;242b,244b,252b,254b,262b,264b;342b,344b,352b,354 b,362b,364b;442b,444b,452b,454b,462b,464b;542b,544b,552b,554b,562b,564b;640b,6 40d,650b,650d,660b,660d) includes an inner layer inner-layer connection portion (Ri) in which the coil segments (80) extending in the circumferential direction are connected in the fifth and sixth layers, an intermediate-layer connection portion (Rm) in which the coil segments (80) extending in the circumferential direction are connected in the third and fourth layers, an outer-layer-side transfer portion (SWo) which connects between an end portion of the outer-layer connection portion (Ro) and an end portion of the intermediate-layer connection portion (Rm), and an inner-layer-side transfer portion (SWi) which connects between an end portion of the inner-layer connection portion (Ri) and the end portion of the intermediate-layer connection portion (Rm).

3. The rotary electric machine (10;310;410;510;610) according to claim 2,
wherein the outer-layer connection portion (Ro), the intermediate-layer connection portion (Rm) and the inner-layer connection portion (Ri) in the inward winding portion (42a,44a,52a,54a,62a,64a;342a,344a,352a,354a,362a,364a; 442a,444a,452a,454a,462a,464a;542a,544a,552a,554a,562a,564a;640a,640c,650a,650c, 660a,660c) extend in the same direction as the circumferential direction.

4. The rotary electric machine (10;110;210;310;410;510;610) according to claim 2,
wherein the outer-layer connection portion (Ro), the intermediate-layer connection portion (Rm) and the inner-layer connection portion (Ri) in the inward winding portion (42a,44a,52a,54a,62a,64a;142a,144a,152a,154a,162a,164a; 242a,244a,252a,254a,262a,264a;342a,344a,352a,354a,362a,364a;442a,444a,452a,454a, 462a,464a;542a,544a,552a,554a,562a,564a;640a,640c,650a,650c,660a,660c) extend in one of opposite directions as the circumferential direction, and
wherein the outer-layer connection portion (Ro), the intermediate-layer connection portion (Rm) and the inner-layer connection portion (Ri) in the outward winding portion (42b,44b,52b,54b,62b,64b;142b,144b,152b,154b,162b,164b; 242b,244b,252b,254b,262b,264b;342b,344b,352b,354b,362b,364b;442b,444b,452b,454 b,462b,464b;542b,544b,552b,554b,562b,564b;640b,640d,650b,650d,660b,660d) extend in the other of the opposite directions as the circumferential direction.

5. The rotary electric machine (10;110;210;310;410;510;610) according to any one of claims 2 to 4,
wherein, in the outer-layer connection portion (Ro) and the inner-layer connection portion (Ri), a number of pitches on side of the bridge portion (84) of each of the coil segments (80) and the number of pitches on side of the distal end portion (82t) of each of the coil segments (80) are both 6,
wherein, in the intermediate-layer connection portion (Rm), one and the other of the number of pitches on side of the bridge portion (84) of each of the coil segments (80) and the number of pitches on side of the distal end portion (82t) of each of the coil segments (80) are 5 and 7,
wherein, in the outer-layer-side transfer portion (SWo) and the inner-layer-side transfer portion (SWi), one of the number of pitches on side of the bridge portion (84) of each of the coil segments (80) and the number of pitches on side of the distal end portion (82t) of each of the coil segments (80) is 6, and
wherein the number of pitches represents how many times as large as the predetermined pitch at which the slots (22s) are arranged in the circumferential direction.

6. The rotary electric machine (410) according to any one of claims 1 to 4,
wherein a winding start position (A1, B1, C1, D1) of the outer-layer connection portion (Ro) in the inward winding portion (442a, 444a, 452a, 454a, 462a, 464a) of the phase coil (440, 450, 460) is set in a predetermined position that is predetermined such that a maximum value of a voltage difference between the coil segments (80) of the different phases that are received in the third and fourth layers in the same one of the slots (22s) is reduced.

7. The rotary electric machine (10;110;210;310;410;510) according to any one of claims 1 to 4,
wherein the three-phase coil (24;124;224;324;424;524) is Y-connected,
wherein the phase coil (40,50,60;140,150,160;240,250,260; 340,350,360; 440,450,460; 540,550,560) includes a first coil portion (42,52,62;142,152,162; 242,252,262;342,352,362;442,452,462) and a second coil portion (44,54,64; 144,154,164;244,254,264;344,354,364;444,454,464) connected in parallel between the input terminal (72,74,76) and a neutral point (N), and
wherein a connection structure of the coil segments (80) in the phase coil is the same for each phase in the three-phase coil.

8. The rotary electric machine (10;110;210;310;410) according to claim 7,
wherein, in the first coil portion (42,52,62;142,152,162;242,252,262; 342,352,362; 442,452,462) and the second coil portion (44,54,64;144,154,164; 244,254,264;344,354,364;444,454,464) of the phase coil (40,50,60;140,150,160; 240,250,260; 340,350,360;440,450,460) in the three-phase coil (24;124;224;324;424), the coil segments (80), which are the same in terms of the connection order as seen from side of the input terminal (72,74,76), are received in a pair of the slots (22s) that are adjacent to each other in the circumferential direction.

9. The rotary electric machine (610) according to any one of claims 1 to 4,
wherein the three-phase coil (624) is Y-connected,
wherein the phase coil (640,650,660) includes a single coil portion (640,650,660) between the input terminal (72,74,76) and a neutral point (N),
wherein the phase coil (640,650,660) includes two inward winding portions (640a,640c,650a,650c,660a,660c), two outward winding portions (640b,640d,650b,650d,660b,660d) and two connection portions (Ji1,Ji2,Ji3,Ji4,Ji5,Ji6), and
wherein a connection structure of the coil segments (80) in the phase coil is the same for each phase in the three-phase coil.

10. The rotary electric machine (610) according to claim 9,
wherein, in the two inward winding portions (640a,640c,650a,650c, 660a,660c), the coil segments (80), which are the same in terms of the connection order as seen from side of the input terminal (72,74,76), are received in a pair of the slots (22s) that are adjacent to each other in the circumferential direction, and
wherein, in the two outward winding portions (640b,640d,650b,650d, 660b,660d), the coil segments (80), which are the same in terms of the connection order as seen from side of the input terminal (72,74,76), are received in a pair of the slots (22s) that are adjacent to each other in the circumferential direction.

11. The rotary electric machine (10;110;210;310;410;510;610) according to any one of claims 1 to 10,
wherein, regarding the connection order of the coil segments (80) as seen from side of the input terminal (72, 74, 76) of the phase coil, the connection order of the coil segments (80) received in the third layer and the connection order of the coil segments (80) received in the fourth layer are later than the connection order of the coil segments (80) received in the outer-layer connection portion (Ro) in the inward winding portion (42a,44a,52a,54a,62a,64a;142a,144a,152a,154a,162a,164a;242a,244a,252a, 254a,262a,264a;342a,344a,352a,354a,362a,364a;442a,444a,452a,454a,462a,464a;542a, 544a,552a,554a,562a,564a;640a,640c,650a,650c,660a,660c).

12. The rotary electric machine (10;110;210;310;410;510;610) according to any one of claims 1 to 10,
wherein the coil segments (80) received in the third and fourth layers are electrically connected to the input terminal (72, 74, 76) of the phase coil via the coil segments (80) received in the outer-layer connection portion (Ro) in the inward winding portion (42a,44a,52a,54a,62a,64a;142a,144a,152a,154a,162a,164a;242a,244a,252a, 254a,262a,264a;342a,344a,352a,354a,362a,364a;442a,444a,452a,454a,462a,464a;542a, 544a,552a,554a,562a,564a;640a,640c,650a,650c,660a,660c).
